(19) Europäisches Patentamt

European Patent Office

Office européen des brevets

(11) **EP 4 031 881 B1**

(12) **EUROPEAN PATENT SPECIFICATION**

(45) Date of publication and mention
of the grant of the patent:
**31.12.2025 Bulletin 2026/01**

(21) Application number: **20781705.7**

(22) Date of filing: **17.09.2020**

(51) International Patent Classification (IPC):
**G01N 35/00** (2006.01)

(52) Cooperative Patent Classification (CPC):
**G01N 35/00732; B01L 3/545; G01N 2035/00851**

(86) International application number:
**PCT/US2020/051273**

(87) International publication number:
**WO 2021/055605 (25.03.2021 Gazette 2021/12)**

(54) **AUTOMATED REAGENT IDENTIFICATION FOR FLUID HANDLING SYSTEM**

AUTOMATISIERTE REAGENZIENIDENTIFIZIERUNG FÜR EIN FLUIDHANDHABUNGSSYSTEM

IDENTIFICATION DE RÉACTIF AUTOMATISÉE POUR SYSTÈME DE MANIPULATION DE FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.09.2019 US 201962901606 P**

(43) Date of publication of application:
**27.07.2022 Bulletin 2022/30**

(73) Proprietor: **Beckman Coulter, Inc.
Brea, CA 92821 (US)**

(72) Inventors:
- **DAVIS, Matthew S.
Indianapolis, Indiana 46224 (US)**
- **JOHNSON, Ronald D.
Westfield, Indiana 46074 (US)**
- **LIU-LEITKE, Yilin
Indianapolis, Indiana 46220 (US)**
- **MOSCHELL, Rachel Ellen
Carmel, Indiana 46032 (US)**
- **NEI, Peter Robert
Brownsburg, Indiana 46112 (US)**
- **SNIDER, John S.
Brownsburg, Indiana 46112 (US)**
- **WEAVER, Kerry J.
Indianapolis, Indiana 46237 (US)**
- **ZIGON, Robert J.
Carmel, Indiana 46032 (US)**

(74) Representative: **Bevan, Emma
Mohun Aldridge Sykes Limited
1 Antler Complex
Bruntcliffe Way
Morley
Leeds, West Yorkshire LS27 0JG (GB)**

(56) References cited:
**EP-A1- 3 383 743        EP-B1- 3 383 743
US-A1- 2005 153 453    US-A1- 2012 179 293**

**Description**

Claim of Priority

This patent application claims the benefit of priority to U.S. Application Serial No. 62/901,606, filed September 17, 2019.

Technical Field

The present application relates generally, but not by way of limitation, to fluid handling systems, such as those that can be used in various applications to combine reagents (e.g., liquid reagents and solvents). More particularly, the present application relates to systems and methods for loading fluid handlers and sequencing of protocols to be run by fluid handlers, such as those loaded with containers of liquids for performing library constructions (e.g., libraries of cellular DNA or RNA fragments for sequencing) using a plurality of reagents and solvents.

Background

To perform library construction on samples using a fluid handling system, such as a liquid handler, the fluid handling system is typically set-up by an operator or user. Set-up can include loading samples, library construction reagents, and various items of labware, such as pipette-tips, plate lids, and liquid containers of various types and configurations, including reservoirs, microtiter plates, test tubes, vials, microfuge tubes, and the like. The reagents for library construction may be supplied as a kit from a vendor. As such, a typical library construction involves loading of a plurality of kit reagents onto a platform of the fluid handling system.

Typical library construction kits can contain anywhere from approximately twelve to eighty-seven reagent containers, with an average of about twenty-eight reagent containers. The containers can vary in size, shape, and volume. Depending on the segment of the library-construction process being performed, only a subset of the library reagents is needed at any given time.

Library construction processes can also call for additional user-provided reagents that are not packaged with the library construction kits purchased from the vendors. Many user-provided reagents are similar in size, shape, and labelling variance to the library construction kit reagents. However, other user-provided reagents are "bulks", such as ethanol and nuclease free water. These "bulks" are generally provided from vendors in large volume containers and are generally poured out into smaller containers, which the technicians hand-label using a marker, for daily use.

The reagents for library construction are typically stored in -80°C, -20°C, 4°C, or room temperature in temperature-controlled locations, with the majority of reagents being - 20°C. Before using reagents, most reagents need to be either thawed or reach room temperature. Frequently the reagents then need to be re-suspended using a vortexer and centrifuged briefly to pull any liquid off of the underside of the cap. Users want to protect the reagents when used out of a temperature-controlled environment, and routinely do so using an ice bucket or cold block. Many frozen reagents usually do not actually freeze solid.

Reagents can be manufactured by multiple vendors. Each manufacturer or vendor typically uses a labelling system that includes various pieces of information. The labelling of the reagent containers can include information and structure that varies across the vendors. For example, some vendors provide name, lot information, expiration date, and barcodes on reagent container labels, while other vendors only label reagent containers with the name.

Publication No. WO 2018/057959 to Stahl et al., entitled "Operation of a Library Preparation System to Perform a Protocol on a Biological Sample" discloses in the Abstract that a "library preparation protocol is determined based on information from an encoded identifier associated with the biological sample and a resource to be used by the library preparation"; and Publication No. WO 2016/090113 to Allen, entitled "Systems and Methods for Facilitating Placement of Labware Components" discloses in the Abstract "a fluid handling apparatus that comprises a projector configured to provide an image of labware onto a support." US 2012/179293 entitled "Systems and methods for the automated pre-treatment and processing of biological samples. " is concerned with the automatic control and scheduling of a staining apparatus for biological samples on slides present within the apparatus. The actions of a robot coupled to the staining apparatus, which performs some of the staining tasks on the individual slides in accordance with their respective protocols, may be prioritized and scheduled. The scheduling may result in increasing or maximizing the throughput of slides. The robot scheduler may respond to spontaneous user actions and adaptively schedule or re-schedule robot actions.

Overview

The present inventors have recognized, among other things, that a problem to be solved can include the proper loading of reagents onto a fluid handling system. As mentioned, library construction processes can include the use of a plurality of reagents that are acted upon by a fluid handling system in a particular order in an automated fashion based on a protocol programmed into the fluid handling system. In order for the automated library construction process to effectively operate, the fluid handling system must be provided with the proper inventory of reagents and, typically, the inventory of reagents must be loaded onto the fluid handling system in predetermined positions based on the programmed protocol. As such, errors can arise in the loading process that result in incorrect reagent vials being loaded onto the fluid handling system and reagent vials being loaded onto incorrect predetermined positions. Library construction kits can cost anywhere from approximately $32/sample to $333/sample, with the average cost being approximately $116/sample in the year 2019. As such, it is desirable to avoid running erroneous protocols to avoid the expense of having to repurchase a library construction kit or portions thereof. Furthermore, in the clinical space, it can typically be a requirement to keep logs of reagent lots used in sample preparations, which can be a time-consuming endeavor.

As such, problems to be solved in loading materials, such as reagents, onto fluid handling systems can include: 1) knowing what reagents to load; 2) knowing what volumes of each reagent are needed; 3) knowing where to load reagents; 4) knowing when to load reagents; and 5) minimizing the amount of time the reagent source stock is exposed in the laboratory.

The present subject matter can provide a solution to these and other problems, such as by providing systems and methods for identifying and verifying reagents loaded onto a fluid handling system. The present subject matter can include imaging devices that generate images of reagent vials already loaded onto a fluid handling system that has been programmed with a protocol. Information obtained from the images can be deciphered by being looked-up in a database of information including manufacturer or vendor reagent vial labeling information. The information obtained from the image of the reagent vial can then be compared to information input in to the programmed protocol. The fluid handling system can then verify that the correct reagent vials are loaded onto the fluid handling system. The fluid handling system can be further configured to determine if reagent vials are located in the proper positions within the fluid handling system and determine if liquid reagent vials are filled to proper levels. If the fluid handling system determines that an error has occurred, the fluid handling system can be configured to issue an alert or alarm and to not proceed in executing the protocol until corrective measures by an operator have been performed. In an example, the fluid handling system can adapt to liquid reagent vials being loaded into improper positions by adapting the programmed protocol. In other examples, the fluid handling system of the present disclosure can operate with the programmed protocol having to be programmed with specific liquid reagent vial locations.

The solutions of the present disclosure can improve fluid handling system efficiency and performance by: 1) eliminating operator errors when loading components onto fluid handling systems; 2) protecting expensive reagents; 3) minimizing technician time when loading fluid handling systems; 4) minimizing technician time in tracking reagent lots used on samples; 5) increasing flexibility by being adaptable to new and different kits; 6) determining if reagent vials are present within the fluid handling system; 7) detecting if caps have been removed from reagent vials loaded into the fluid handling system; and reducing reagent exposure time by allowing aliquoted reagents to be returned to storage, e.g., refrigeration, early after being identified and aliquoted.

## Summary of the Invention

In an example, a fluid handling system for preparing a sample according to a programmed protocol as set out in the appended set of claims. In some embodiments, the imaging device can be configured to produce composite images. In some embodiments, the imaging device can be configured to produce the composite images via slit-scan imaging. In some embodiments, the imaging device can be configured to produce an unrolled image. In some embodiments, the tube holder may comprise a carousel configured to hold a plurality of reagent vessels, wherein the carousel is rotatable along a center axis of the carousel. In some embodiments, the tube holder may comprise a tray configured to hold a plurality of reagent vessels, wherein the tray is configured to linearly slide along an axis. In some embodiments, the tube holder can include a turntable to rotate the reagent vessel along a central axis of the reagent vessel such that the imaging device can view an entire perimeter of the reagent vessel. In some embodiments, a reagent on the tube holder can be aliquoted regardless of a position on the carousel into which the reagent is loaded. In some embodiments, the imaging device may have a field of view configured to simultaneously image each of the plurality of reagent vessels. In some embodiments, the imaging device may be one of a plurality of imaging devices. The plurality of imaging devices can be positioned such that all portions of the label are in view of at least one of the plurality of imaging devices. In some embodiments, the fluid handling system may be configured to determine a level of liquid within the reagent vessel, and the processor may be configured to confirm sufficient volume of liquid has been loaded into the reagent vessel according to the protocol. In some embodiments, the non-transitory computer-readable storage medium may include visual indicators for reagent vessels from different manufacturers. The visual indicators on the label may include lot information for the reagent vessel, the lot information including a lot number and an expiration date. The processor may be configured to provide a warning of an expired reagent.

In an additional example, a fluid handling system for processing a sample using a reagent kit as set out in the appended set of claims. In some embodiments, the imaging device can be configured to produce composite images via slit-scan imaging. In some embodiments, the reagent carousel can be rotatable along a center axis of the reagent carousel. In some embodiments, the imaging device may have a field of view configured to simultaneously image the plurality of reagent vessels in the reagent carousel. In some embodiments, the non-transitory, computer-readable storage medium may include a database including visual indicators for reagent vessels from different manufacturers, including a lot number and an expiration date. The processor may be configured to compare visual indicators in the database to decipher the visual indicators in the images. The processor may be configured to compare the deciphered visual indicators in the images to information in the programmed protocol. In some embodiments, the fluid handling system can be configured to determine a level of liquid within a reagent vessel, and the processor can be configured to confirm sufficient volume of liquid has been loaded into the reagent vessel according to the programmed protocol.

In yet another example, a method of identifying reagents loaded onto a fluid handling system as set out in the appended set of claims. In some embodiments, the multiple reagent vessels can be loaded into the vessel holder according to positional information in the protocol. In some embodiments, determining if appropriate reagents have been loaded into the vessel holder to perform the protocol can comprise determining if appropriate reagents are loaded into the vessel holder at locations according to the protocol. In some embodiments, the protocol can be performed based on a sequence of steps outlined in the protocol. In some embodiments, the multiple reagent vessels can be loaded into the vessel holder in arbitrary positions. In some embodiments, determining if appropriate reagents have been loaded into the vessel holder to perform the protocol can comprise determining if sufficient reagents are loaded into the vessel holder to perform the protocol. In some embodiments, the protocol can be performed based on a sequence of steps determined based on locations of the reagents in the vessel holder. In some embodiments, imaging individual labels of the multiple reagent vessels with the imaging device to produce label images can comprise imaging the individual labels with a slit-scan process to generate a panoramic image. Imaging individual labels of the multiple reagent vessels with the imaging device to produce label images can further comprise rotating individual reagent vessels to obtain the panoramic images. The method may further comprise calibrating a rotational speed of individual reagent vessels using a geometric calibration label. In some embodiments, comparing information in the label images to identification information located in the database in communication with the controller can comprise comparing visual indicator information to manufacturer information stored in the database. In some embodiments, the method may further comprise determining a destination location specified for reagents in the protocol, directing a pipettor to aspirate a volume of liquid from a reagent vessel in the vessel holder, and directing the pipettor to dispense the aspirated volume at the determined destination location for the identified reagent. In some embodiments, the method may further comprise determining from images of the vessel holder if sufficient volume of liquid has been loaded into the reagent vessels to perform the protocol, and providing an alarm if insufficient liquid remains in a reagent vessel. In some embodiments, the method may further comprise determining from images of the vessel holder if caps have been removed from the reagent vessels, and providing an alarm if a cap has not been removed from a reagent vessel. In some embodiments, the method can further comprise determining image quality for images of the vessel holder, and providing an alarm if images of the vessel are insufficiently clear to determine information from images of labels in the images of the vessel holder. In some embodiments, the method may further comprise a user overriding alarms generated by the system after manual or visual confirmation.

Brief Description of the Drawings

FIG. 1 is a block diagram of a fluid handling system according to an example of the present disclosure.
FIG. 2 is perspective view of an exemplary fluid handling system of FIG. 2 comprising a housing, a carousel and an imaging device.
FIG. 3 is plan view of a deck for loading into the housing of FIG. 2 with spaces for various components including the carousel.
FIG. 4A is a perspective view of a first example of a carousel having a plurality of receptacles for receiving components such as liquid vials.
FIG. 4B is a perspective view of an underside of the carousel of FIG. 4A showing a carousel drive system.
FIG. 4C is a side view of a pulley assembly of the carousel drive system of FIG. 4B.
FIG. 4D is a side cross-sectional view of a pedestal drive system for the carousel of FIG. 4A.
FIG. 5 is a perspective view of a second example of a carousel having different sized receptacles.
FIG. 6 is a schematic view of a screen shot of a control panel for the fluid handling system of FIGS. 1 and 2.
FIG. 7 is a close-up perspective view of one of the receptacles of the carousel of FIG. 4A having a liquid vial positioned therein and positioned relative to a transport device and an imaging device.
FIG. 8 is a perspective view of a plurality of liquid vials having different types of indicia loaded into positions of a carousel.
FIGS. 9A - 9C are views of different portions of a rectangular label wrapped around a cylindrical liquid vial.

FIG. 10 is a line diagram illustrating methods for identifying reagents loaded onto a fluid handling system.

FIG. 11 is a line diagram illustrating methods for operating a fluid handling system.

FIG. 12 is diagram illustrating an example registration label.

FIG. 13A is a diagram illustrating the registration label of FIG. 12 taken at a pedestal rotation speed slower than a camera sample speed.

FIG. 13B is a diagram illustrating the registration label of FIG. 12 taken at a pedestal rotation speed commensurate with a camera sample speed.

Detailed Description

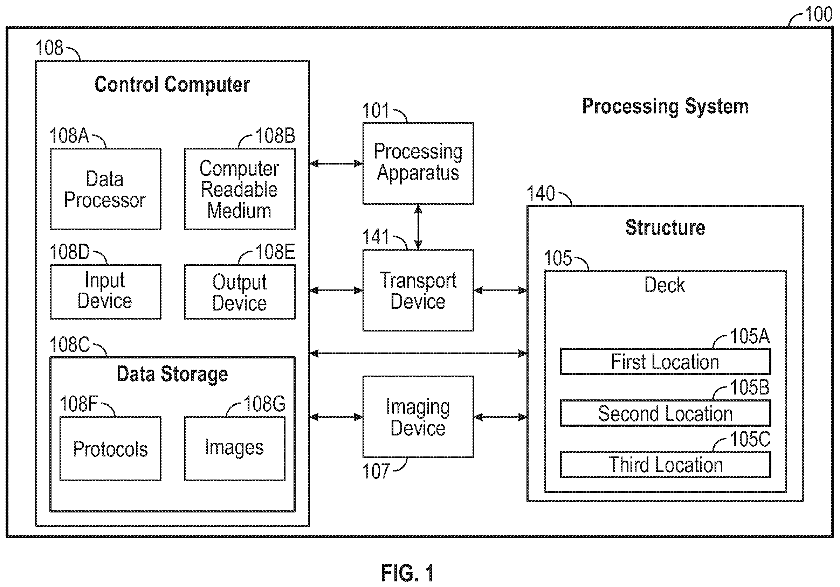

FIG. 1 is a high-level block diagram of processing system 100 according to an embodiment of the disclosure. Processing system 100 can comprise control computer 108 operatively coupled to structure 140, transport device 141, processing apparatus 101 and imaging device 107. Input/output interfaces may be present in each of these devices to allow for data transmission between the illustrated devices and external devices. Processing system 100 can comprise a fluid handling system as described herein. Fluids can include various liquids such as reagents and the like. An exemplary processing system in which the present disclosure can be implemented is the Biomek i7 Automated Workstation marketed by the Beckman Coulter, Inc. of Brea, California.

For explanatory purposes, processing system 100 will mainly be described as a system for processing and analyzing biological samples, such as the preparation of libraries of nucleic acid fragments (e.g., libraries of fragments derived from cellular DNA or RNA molecules) including next-generation sequencing (NGS) libraries. For example, embodiments of the present disclosure can include imaging a carousel or tray, or some other reagent vessel holder, loaded onto a deck in order to identify vials loaded into the carousel to assess the content of labels applied to the vials, among other things. However, in additional examples, processing system 100 can be configured perform functions other than processing and analyzing biological samples, such as other processes that can involve identifying a plurality of components loaded onto a machine that performs work with or on the components.

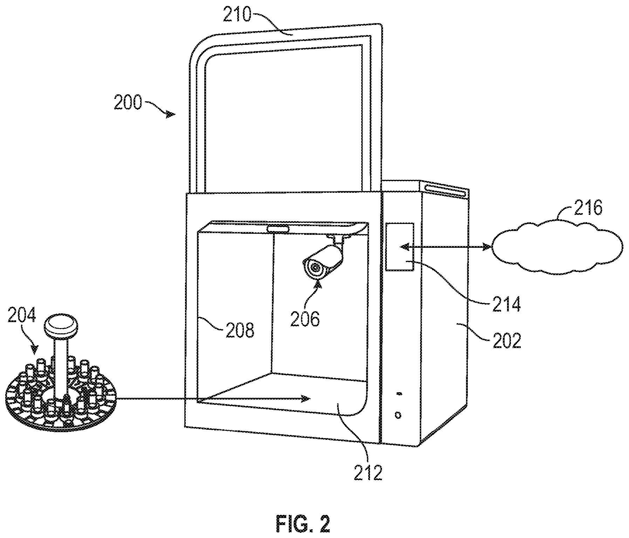

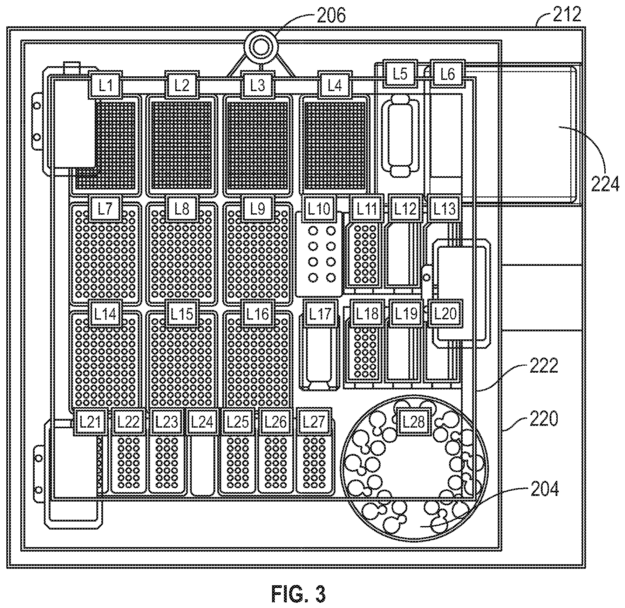

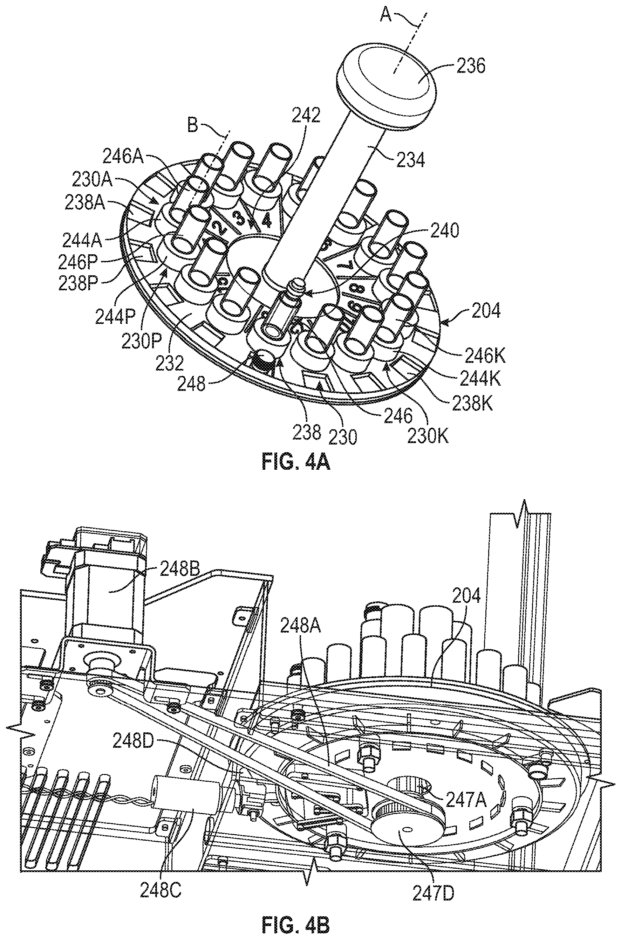

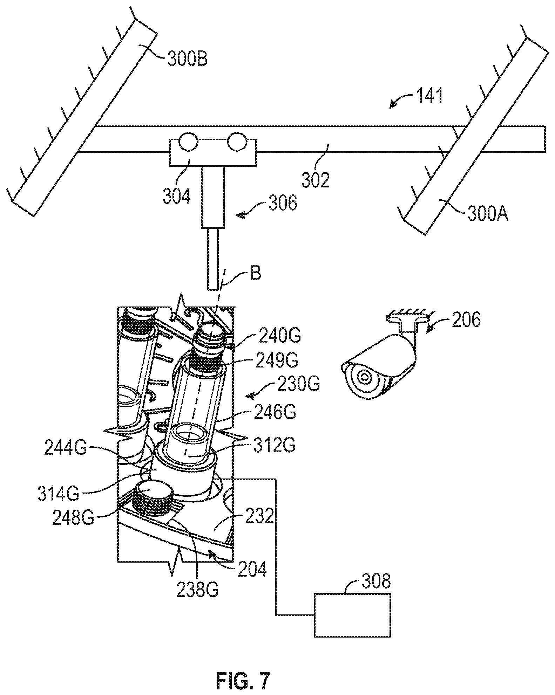

Structure 140 can include a housing (e.g., housing 202 of FIG. 2), legs or casters to support the housing, a power source, deck 105 loadable within the housing, and any other suitable feature. Deck 105 can include a physical surface (e.g., platform 212 of FIG. 2) such as a planar physical surface upon which components can be placed and accessed for experiments, analyses, and processes. In some instances, deck 105 can be a floor or a tabletop surface. Deck 105 can be subdivided into a plurality of discrete deck locations (e.g., locations L1 - L28 of FIG. 3) for placing different components. The locations can be directly adjacent or can be spaced apart from each other. Each deck location can include dividers, inserts, and/or any other support structure for separating the different deck locations and containing components. For exemplary purposes, FIG. 1 shows first location 105A, second location 105B, and third location 105C on deck 105, though additional locations can be included. One or more of locations 105A -105C can be loaded with a carousel (e.g., carousel 204 of FIG. 4A) that can include spaces for holding one or more components, such as vials of liquid. Structure 140 can additionally include a motor (e.g., motor 248B of FIG. 4B or motor 308 of FIG. 7) or another device for rotating the carousel relative to deck 105 to facilitate, among other things, interaction with imaging device 107. Furthermore, motor of structure 140, or an additional motor of structure 140, can be used to rotate individual vials loaded onto deck 105, a tray loaded on deck 105 or a carousel located on deck 105.

Transport device 141 (e.g., carriage 304 of FIG. 7), which can represent multiple transport devices, can prepare and/or transport components between deck 105 and processing apparatus 101, as well as between different locations on deck 105. Examples of transport devices may include conveyors, cranes, sample tracks, pick and place grippers, laboratory transport elements that can move independently (e.g., pucks, hubs or pedestals), robotic arms, and other tube or component conveying mechanisms. In some embodiments, transport device 141 includes a pipetting head configured to transfer liquids. Such a pipetting head may transfer liquids within removable pipette tips and may include grippers suitable for grasping or releasing other labware, such as microwell plates.

Processing apparatus 101 can include any number of machines or instruments for executing any suitable process. For example, processing apparatus 101 can include an analyzer, which may include any suitable instrument that is capable of analyzing a sample such as a biological sample. Examples of analyzers include spectrophotometers, luminometers, mass spectrometers, immunoanalyzers, hematology analyzers, microbiology analyzers, and/or molecular biology analyzers. In some embodiments, processing apparatus 101 can include a sample staging apparatus. A sample staging apparatus can include a sample presentment unit for receiving sample tubes with biological samples, a sample storage unit for temporarily storing sample tubes or sample retention vessels, a means or device for aliquotting a sample, such as an aliquottor, a means for holding at least one reagent pack comprising the reagents needed for an analyzer, and any other suitable features.

One or more imaging devices 107 can be positioned relative to deck 105 to ensure that all portions of any single reagent vial label loaded into system 100 is in view of at least one camera. Thus, for a reagent vial label that is wrapped around the circumference of a reagent vial, one or more imaging devices 107, with or without the use of mirrors or turntables, can have complete three-hundred-sixty-degree view of each reagent vial. Imaging device 107 can be any suitable device for capturing an image of deck 105 and any components on deck 105 or the entirety of structure 140. For example, imaging device 107 can be any suitable type of camera, such as a photo camera, a video camera, a three-dimensional image camera, an infrared camera, etc. Some embodiments can also include three-dimensional laser scanners, infrared light depthsensing technology, or other tools for creating a three-dimensional surface map of objects and/or a room. In examples, imaging device 107 can utilize slit-scan technology to produce panoramic images, as is known in the art. As such, imaging device 107 can include appropriate slides or covers having one or more slits to constrain the viewing area of imaging device 107. Furthermore, virtual slits can be used in combination with digital photography. In any configuration, slit-scan imaging can involve taking images, with a stationary camera, of individually rotated reagent vials through a slit or virtual slit to obtain columns of pixels that are less than an entire width of an image. The pixels that are in focus or in view of the camera as the objects in the field of view of the camera are rotated, such as through the slit, are used to generate the columns. Unfocused or non-in-view portions of the objects in the images can be trimmed from the columns of pixels. The objects can be rotated at a steady rotational speed, commensurate with a sample speed of the camera, such that multiple images can be produced, as is discussed in greater detail below. Multiple columns of pixels from different images for different positions of the objects can then be pieced together to form an unrolled image that is a compilation of a plurality of narrower images. In this way, the camera can "peel" off the label of a reagent vial to prepare the label for recognition of visual indicators, e.g., text or symbols, by the fluid handling system.

Imaging device 107 can comprise one of a plurality of imaging devices mounted to or nearby structure 140. In additional examples, multiple imaging devices 107 can be mounted to obtain multiple views of reagent vials disposed on deck 105. The multiple imaging devices can be spaced apart to obtain complete views of labels mounted to the reagent vials. Imaging devices 107 can be mounted proximate structure 140 to have overlapping fields of view about three-hundred-sixty degrees of a location on deck 105. For example, four imaging devices 107 with one-hundred-ten-degree fields of view can be evenly spaced to generate four images that overlap on each end with images from adjacent imaging device 107. As such, the images can be assembled, or "quilted", together to form a composite image. Furthermore, in additional examples, mirrors can be positioned in or nearby structure 140 to facilitate one or more imaging devices 107 obtaining complete field of view of a single label.

Control computer 108 can control the processes run on processing system 100, initially configure the processes, and check whether a component setup has been correctly prepared for a process. Control computer 108 can control and/or transmit messages to processing apparatus 101, transport device 141, and/or imaging device 107. Control computer 108 can comprise data processor 108A, non-transitory computer readable medium 108B and data storage 108C coupled to data processor 108A, one or more input devices 108D and one or more output devices 108E. Although control computer 108 is depicted as a single entity in FIG. 1, it is understood that control computer 108 may be present in a distributed system or in a cloud-based environment. Additionally, embodiments allow some or all of control computer 108, processing apparatus 101, transport device 141, and/or imaging device 107 to be combined as constituent parts in a single device.

Output device 108E can comprise any suitable devices that can output data. Examples of output device 108E can include display screens, video monitors, speakers, audio and visual alarms and data transmission devices. Input device 108D can include any suitable device capable of inputting data into control computer 108. Examples of input devices can include buttons, a keyboard, a mouse, touchscreens, touch pads, microphones, video cameras and sensors (e.g., light sensor, position sensors, speed sensor, proximity sensors).

Data processor 108A can include any suitable data computation device or combination of such devices. An exemplary data processor may comprise one or more microprocessors working together to accomplish a desired function. Data processor 108A can include a CPU that comprises at least one high-speed data processor adequate to execute program components for executing user and/or system-generated requests. The CPU may be a microprocessor such as AMD's Athlon, Duron and/or Opteron; IBM and/or Motorola's PowerPC; IBM's and Sony's Cell processor; Intel's Celeron, Itanium, Pentium, Xeon, and/or XScale; and/or the like processor(s).

Computer readable medium 108B and data storage 108C can be any suitable device or devices that can store electronic data. Examples of memories may comprise one or more memory chips, disk drives, etc. Such memories may operate using any suitable electrical, optical, and/or magnetic mode of operation.

Computer readable medium 108B can comprise code, executable by data processor 108A to perform any suitable method. For example, computer readable medium 108B can comprise code, executable by processor 108A, to cause processing system 100 to perform an automated reagent-identification method including imaging individual labels of multiple reagent vessels (e.g., vials) loaded onto a carousel with imaging device 107 to produce label images, comparing information in the label images to identification information located in a database in computer readable medium 108B, determining if appropriate reagents have been loaded into the carousel to perform a protocol 108F programmed into control computer 108 by an operator, and outputting an alert or alarm to the operator indicating any differences between the information from the label images and the programmed protocol. Such differences can cause disruption or failure of a process to run on processing system 100 or can result in invalid or inaccurate information being generated by processing system 100.

Computer readable medium 108B can comprise code, executable by data processor 108A, to receive and store process steps for one or more protocols (e.g., a protocol for processing a biological sample or a protocol for a library construction process), as well as to control imaging device 107, structure 140, transport device 141, and/or processing apparatus 101 to execute the process steps for the one or more protocols. Computer readable medium 108B can also include code, executable by data processor 108A, for receiving results from processing apparatus 101 (e.g., results from analyzing a biological sample) and for forwarding the results or using the results for additional analysis (e.g., diagnosing a patient). Additionally, computer readable medium 108B can comprise code, executable by data processor 108A, for obtaining an image of deck 105, identifying information in the images of deck 105, deciphering information in the images using information stored in data storage 108C or computer readable medium 108B comparing the deciphered information to information contained in protocol 108F, and displaying differences to a user at output device 108E.

Data storage component 108C can be internal or external to control computer 108. Data storage component 108C can include one or more memories including one or more memory chips, disk drives, etc. Data storage component 108C can also include a conventional, fault tolerant, relational, scalable, secure database such as those commercially available from Oracle™ or Sybase™. In some embodiments, data storage 108C can store protocols 108F and images 108G. Data storage component 108C can additionally include instructions for data processor 108A, including protocols. Computer readable medium 108B and data storage component 108C can comprise any suitable storage device, such as nonvolatile memory, magnetic memory, flash memory, volatile memory, programmable read-only memory and the like.

Protocols 108F in data storage component 108C can include information about one or more protocols. A protocol can include information about one or more processing steps to complete, components used during the process, a component location layout, and/or any other suitable information for completing a process. For example, a protocol can include one or more ordered steps for processing a biological sample or processing a DNA library. A protocol can also include steps for preparing a list of components before starting the process. The components can be mapped to specific locations on deck 105 or in the carousel (e.g., carousel 204 of FIG. 4A) where transport device 141 can obtain the components in order to transport them to processing apparatus 101. This mapping can be encoded as instructions for operating transport device 141, such as instructions directing a pipettor to aspirate a volume of liquid from a reagent vessel in the carousel and to dispense the volume at a predetermined destination, and the mapping can also be represented by a virtual image shown to a user such that the user can place the components on deck 105 and the carousel. Embodiments allow processing system 100 to be used for multiple processes (e.g., multiple different sample processes or preparation procedures). Accordingly, information about multiple protocols 108F can be stored and retrieved when needed. Components on deck 105 and the carousel can be rearranged, changed, and/or replenished as necessary when changing from a first process to a second process, or when re-starting a first process.

An image can include a depiction of one or more objects. As examples, images can include digital pictures or photographs, videos, three-dimensional pictures and videos, color photos, black and white photos, high dynamic range images (e.g., combining multiple images taken of the same subject with different exposures), etc. In examples, images 108G can additionally comprise slit-scan images where a moveable or a virtual slide through which a slit is formed is positioned between imaging device 107 and deck 105. Images 108G can comprise quilted or unrolled images.

Images 108G in data storage 108C can include a real-world visual representation of deck 105 and the carousel, as well as of components disposed on or in deck 105 and the carousel and labels disposed on those components. In each image, deck 105 and the carousel can be shown in a ready state for beginning a certain process, with components for executing a protocol placed in locations accessible to transport device 141. Each of images 108G can be associated with a specific protocol from the stored protocols 108F. In some embodiments, there can be a single image for certain protocol. In other embodiments, there can be multiple images (e.g., from different angles, with different lighting levels, or containing acceptable labware substitutions in some locations) for a certain protocol. Images 108G can be stored as various types or formats of image files including JPEG, TIFF, GIF, BMP, PNG, and/or RAW image files, as well as AVI, WMV, MOV, MP4, and/or FL V video files.

Deck 105 can be subdivided into a plurality of discrete deck locations for staging different components. The discrete locations may be of any suitable size. An example of deck 105 with a plurality of locations is shown in FIG. 3. Deck 220 in FIG. 3 shows separate areas numbered L1 through L28, as well as thermal cycler 224, which can operate as a separate location for separate types of components or packages of components. Deck 105 can have additional locations or fewer locations as desired. While these locations can be numbered or named, they may or may not be physically labeled or marked on deck 105 in physical embodiments of the system.

As discussed herein, images, such as images 108G, can be used to verify if the proper components are loaded into deck 105 and the carousel for completing protocol 108F programmed into processing system 100 by an operator, and if those components are located in correct positions for executing the programmed protocol, if required by the protocol.

FIG. 2 is perspective view of fluid handling system 200 that can comprise an example of processing system 100 of FIG. 2. Fluid handling system 200 can comprise housing 202, carousel 204 and imaging device 206. Housing 202 can comprise a plurality of walls or panels that form an enclosure into which carousel 204 can be positioned. The enclosure can have opening 208 over which cover panel 210 can be positioned to encapsulate carousel 204 within the enclosure.

Housing 202 can additionally include platform 212 on which a deck, such as deck 105 (FIG. 1) or deck 220 (FIG. 3) can be positioned. The deck can include a slot or socket for receiving carousel 204. In examples, the slot or socket can be configured to hold carousel 204 in a predetermined or know position relative to imaging device 206. Platform 212 can hold the deck in a predetermined or known position relative to imaging device 206. Housing 202 can additionally comprise space for holding controller 214, such as those of control computer 108 (FIG. 1). Controller 214 can be configured to communicate with network 216, such as via a wireless or wired communication link.

Imaging device 206, which may comprise imaging device 107 of FIG. 1, can be located within housing 202 in a stationary location. Imaging device 206 can be configured to point at a single location of carousel 204. Simultaneously, a pipettor of transport device 141 or processing apparatus 101 (FIG. 1) can be located within housing 202 to access a location of carousel 204. Carousel 204 can spin or rotate to present different locations to the pipettor and imaging device 206. In other examples, imaging device 206 can be mounted within housing 202 to move a viewing area over different portions of the interior of housing 202.

Controller 214 can be configured to execute a protocol for components loaded into carousel 204 and loaded onto the deck within housing 202. In order for controller 214 to perform one or more sequences of steps on a set of vials loaded into carousel 204 per the protocol, controller 214 should know the location of each vial within carousel 204, e.g., the contents of each vial at each location within carousel 204. As discussed herein, controller 214 can be configured to operate imaging device 206 to obtain images of carousel 204 and components loaded into carousel 204. In particular, carousel 204 can be loaded with vials of material, wherein each vial can have a label that provides identifying information as to the contents of each vial, a set of vials to which each vial belongs, a manufacturer of the set of vials, one or more protocols for processing system 200 to execute with the set of vials, etc. Images of the vial labels can be read by controller 214 to recognize information presented in the labels. The information read from the labels can be compared to information, such as information obtained from network 216, stored in a computer readable medium, such as medium 108B of FIG. 1. The information stored in the computer readable medium can include a protocol for the set of vials that includes one or more sequences of steps for interacting with the set of vials, such as an order for which transport device 141 can interact with each vial. Thus, controller 214 can compare the protocol to the actual contents loaded into housing 202 as identified from the information read from the labels, before the protocol is executed and, if necessary, inform an operator of any errors or potential errors before fluid handling system 200 initiates the protocol.

FIG. 3 is plan view of deck 220 for loading onto platform 212 of housing 202 of FIG. 2. Deck 220 can include spaces or locations for various components, including carousel 204. Imaging device 206 can be mounted within housing 202 relative to platform 212 such that imaging device can produce field of view 222 that covers all of platform 212. However, in various examples, fieled of view 222 can be configured to cover only portions of platform 212 and multiple imaging device can be used or an articulating imaging device can be used that can move field of view 222 across platform 212 to different locations to achieve total coverage.

FIG. 3 shows deck 220 including locations numbered L1 - L28, as well as other components such as thermal cycler 224, which can operate as a separate location for separate types of components or packages of components. Examples of deck 220 can have additional locations or fewer locations, as desired. While these locations can be numbered or named, the locations may or may not be physically labeled or marked on deck 220 in physical embodiments of fluid handling system 200. In examples of fluid handling system 200, some or all of the locations can be occupied by a pre-defined type of component according to a certain protocol. For example, locations L1 - L27 can be loaded with a component of a package or reagent kit or a component as specified by a protocol, and location L28 can be loaded with carousel 204. Some of locations L1 - L27 can include the same type of component. The components can comprise test tubes, microwell or microtiter plates, pipette tips, plate-lids, reservoirs or any other suitable labware component. The components can also comprise an item of laboratory equipment, such as a shaker, stirrer, mixer, temperature-incubator, vacuum manifold, magnetic plate, thermocycler, or the like. In examples, one or more locations can be physically part of structure 140 (FIG. 1), housing 202 (FIG. 2) or deck 220 (FIG. 3), or can be a separate component disposed on platform 212. Each of locations L1 - L28 can be accessed by transport device 141 (FIG. 1). For example, locations LI - L28, and thermal cycler 224 can be physically separate from structure 140 or deck 220.

Imaging device 206 can be configured to recognize the presence of one or more component at each of locations L1 - L27 and in the presence of carousel 204 at location L28. Furthermore, imaging device 206 can be configured to read information from the one or more components located at each of locations L1 - L27 and carousel 204 at location L28. As can be seen in FIG. 3, carousel 204 can include a plurality of locations within carousel 204 itself. Each of those locations can be numbered on carousel 204 so that components, e.g., vials of liquid, can be loaded into carousel 204 is a desired manner, e.g., according to a protocol. Images of carousel 206 taken by imaging device 206 can be used to read information from labels of vials loaded into carousel 204.

FIG. 4A is a perspective view of a first example of carousel 204 from FIG. 3. Carousel 204 can comprise receptacles 230, base 232, extension 234, knob 236 and pockets 238.

Base 232 can comprise a platform for linking a plurality of vials into a common structure. Base 232 can be round or circular in shape to facilitate rotation about center axis A. Center axis A can extend from the center of the circular shape of base 232. Extension 234 can extend along axis A to provide clearance for knob 236 above receptacles 230A - 230P and vials located therein. Knob 236 can comprise an ergonomically shaped body to facilitate grasping and lifting and transporting of carousel 204 by a user. As mentioned, carousel 204 can be configured to rotate about axis A. For example, a motor or drive mechanism of fluid handling system 200 can be configured to engage carousel 204 to impart rotational movement. The drive mechanism can be configured to engage knob 236 or base 232.

Carousel 204 can comprise a plurality of receptacles 230 for receiving components, such as liquid vial 240. In the example of FIG. 4A, carousel 204 includes sixteen receptacles 230A - 230P. Receptacles 230A - 230P can be physically labeled on carousel, such as by using numeric indicia 242. Numeric indicia 242 can be used by an operator of fluid handling system 200 to load a plurality of liquid vials 240 into carousel 204 according to a protocol having correspondingly numbered list of liquid vials. As mentioned, carousel 204 can be configured to rotate to align receptacles 230A - 230P with imaging device 206 and transport device 141. However, in other examples, carousel 204 can be configured to be loaded into deck 220 in only one orientation such that controller 214 will know the locations of receptacles 230. Controller 214 can be configured to use imaging device 206 to read numeric indicia 242 to determine the orientation of carousel 204.

Receptacles 230A - 230P can include pedestals 244A - 244P and sleeves 246A - 246P, respectively. Pedestals 244A - 244P can comprise locations on which vials rest. The locations of pedestals 244A - 244P can be located on base 232 in known positions so that transport device 141 can know where to find vials located in receptacles 230A - 230P. Sleeves 246A - 246P can extend from pedestals 244A - 244P, respectively, to provide support for vials located therein. Sleeves 246A - 246P can comprise elongate tube of sufficient length to hold reagent vials in an upright position. Sleeves 246A - 246P can be separable from pedestals 244A - 244P to facilitate, for example, cleaning. Sleeves 246A - 246P can be made of a transparent material to facilitate viewing of vials therein. In particular, sleeves 246A - 246P can be transparent or clear to allow imaging device 206 to view labels of vials inside sleeves 246A - 246P. Pockets 238A - 238P can be provided for each of receptacles 230A - 230P. Pockets 238A - 238P can be configured to receive and hold a cap, such as cap 248 for vial 240, for a vial located in a respective receptacle of receptacles 230A - 230P. As such, each of pockets 238A - 238P can comprise a depression or cavity that extends down into base 232 to prevent or inhibit movement of a cap. In examples, pockets 238A - 238P comprise rectangular depressions that prevent circumferential or radial movement of the caps relative to axis A. Furthermore, pockets 238A - 238P can be provided with flanges or other features to immobilize the caps.

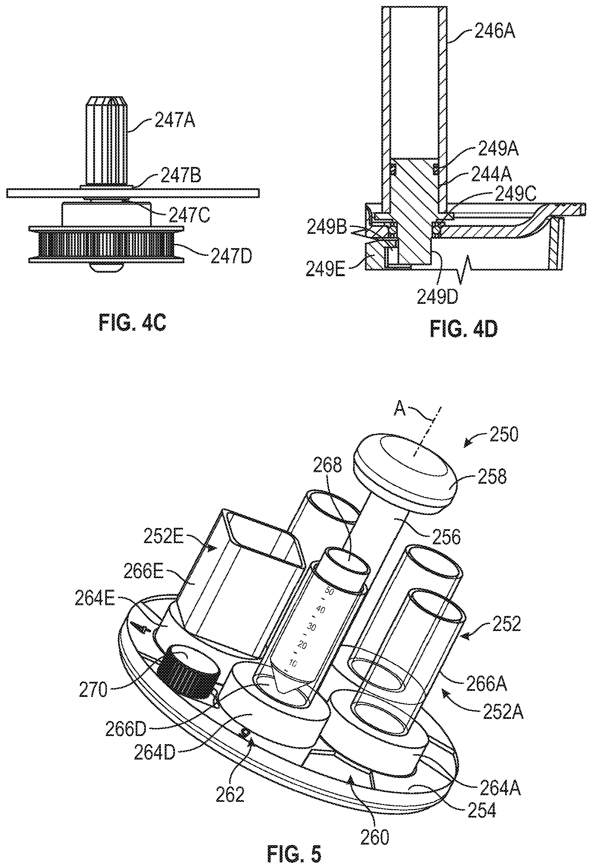

Carousel 204 can be configured to rotate or spin about axis A to generate centrifugal force, as shown in FIGS. 4B and 4C. Additionally, rotation of carousel 204 can be used to align vials with transport device 141 and/or imaging device 107 (FIG. 1). For example, carousel 204 can include drive hub 247A, bearing 247B, washer 247C and pulley 247D. Belt 248A can be connected to motor 248B and pulley 247D to provide rotational input to carousel 204. Motor 248B can comprise a stepper motor. Drive hub 247A can comprise a spline or sprocket over which carousel 204 can be fitted, in one of a plurality of different rotational positions. Solenoid 248C can be provided and can include an actuatable tab 248D to engage carousel 204 (e.g., through a cut-out in a support bracket in structure 140) to selectively inhibit rotation of carousel 204. Furthermore, each of receptacles 230A - 230P can be configured to individually rotate to allow imaging device 204 a three-hundred-sixty-degree view of vials located in each of receptacles 230A - 230P, regardless of the circumferential orientation of carousel 204, as shown in FIG. 4D. That is, each of pedestals 244A - 244P, as well as sleeves 246A - 246P mounted thereto, can be configured to rotate about center axis B such that a reagent vial resting thereupon can simultaneously rotate. Thus, each of pedestals 244A - 244P can comprise a turntable mounted to base 232 that can rotate relative to base 232, thereby additionally rotating sleeves 246A - 246P. As shown in FIG. 4D, pedestal 244A can comprise sleeve 246A, O-ring groove 249A, O-ring 249B, bearing 249C and drive 249D. Pedestal 244A can be rotated by engagement with reagent input drive 249E, which can be mounted concentrically on drive hub 247A. As drive hub 247A rotates, the outer diameter of drive hub 247A around which O-ring 249B is fitted engages pedestal 244A to cause rotation of pedestal 244A in bearing 249C. Each of pedestals 244A --- 244P can be positioned around the outer diameter of drive hub 249E to be simultaneously rotated. As is discussed in greater detail with reference to FIGS. 7 - 8, imaging device 206 can be configured to use slit-scan technology, or other technology, to produce panoramic images of the labels on vials 240.

FIG. 5 is a perspective view of an alternative example of carousel 204 of FIG. 3 having different sized receptacles. Carousel 250 can comprise receptacles 252, base 254, extension 256, knob 258, pockets 260 and numeric indicia 262. Carousel 250 can function in a similar manner as carousel 204, such as by being configured to rotate about axis A. Carousel 250 can have the same footprint as carousel 204 so as to occupy the same surface area of deck 220. For example, base 254 can have the same shape and size, e.g. circle and diameter, as base 232. However, carousel 250 features fewer receptacles that are of different size and shape.

Receptacles 252A - 252E can include pedestals 264A - 264E and sleeves 266A - 266E, respectively. Receptacles 252A - 252D can comprise cylindrical receptacles with larger diameters than receptacles 230A - 230P. Receptacle 252E can comprise a square shaped container. Receptacle 252E can be larger than receptacles 252A - 252D to, for example, receive a bulk material, e.g., such as 80% ethanol, water, beads, and etcetera, vial that can be used with the reagents of receptacles 252A -252D. Sleeves 266A - 266E can be clear or transparent to allow for viewing of vials, such as vial 268, when positioned within receptacles 252A - 252E. Pockets 260A - 260E can be configured to receive a cap, such as cap 270 for vial 268.

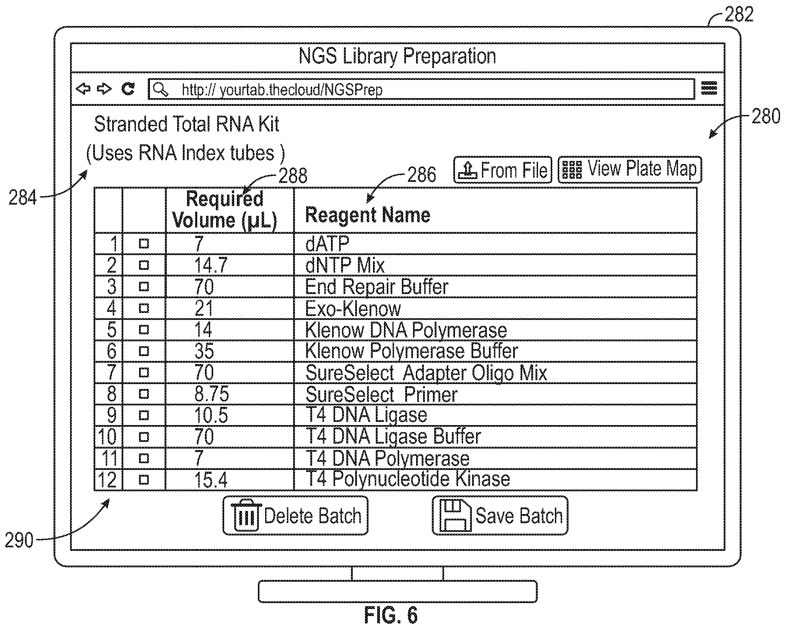

FIG. 6 is a schematic view of screen shot 280 of control panel 282 for fluid handling system 200 of FIGS. 1 and 2. Control panel 282 can comprise an input and output device for control computer 108 (FIG. 1) or can comprise an embodiment of an interface for controller 214. Screen shot 280 can comprise information for a protocol, including title block 284, reagents block 286, volume block 288 and carousel location block 290, as well as other information blocks, such as a storage temperature block and a preparation temperature block. Reagents block 286 can comprise a listing of reagents to be used by a protocol being programmed into control computer 108. As such, an operator of system 200 can enter into control panel 282 a particular reagent for each carousel location in carousel location block 290. Carousel location block 290 can include numeric indicia, such as numeric indicia 242 and 262, that corresponds to numeric indicia on a given carousel, such as carousels 204 and 250.

Using control panel 282, a lab technician can configure a batch remotely from housing 202. Configuration of a batch can include selection of a protocol, samples, indices, method options, and safe stopping points. The lab technician can print off a reagent work aid (RWA) at a nearby printer. The RWA can provide information about reagents needed to complete the batch that was configured. The RWA can include reagent storage condition, reagent box name, reagent name, thawing instructions (if applicable), vortexing instructions (if applicable), and centrifuging instructions (if applicable). The order of the items on the RWA can be determined by an applications scientist to make the most sense in terms of streamlining the preprocessing (thaw, vortex, centrifuge). The lab technician can retrieve the reagents according to the RWA and can perform any required or desired preprocessing steps. As such, the lab technician can begin a sample processing procedure by obtaining a reagent kit, assessing its contents, if system 100 is configured as such, entering a listing of reagent vials into control panel 282 according to a protocol developed by the applications scientist, and loading reagent vials into a carousel. In other examples, the listing of reagent vials can be included in a protocol already programmed into system 100 such that the lab technician need not manually enter the listing of reagent vials.

FIG. 7 is a close-up perspective view of receptacle 230G of FIG. 4A having liquid vial 240G positioned therein. Receptacle 230G can comprise one of a plurality of receptacles loaded into carousel 204. Carousel 204 can be loaded into housing 202 of fluid handling system 200 of FIG. 1. Carousel 204 can be disposed relative to transport device 141 and imaging device 206. Transport device 141 can comprise an overhead crane system having rails 300A and 300B that run across a length of platform 212 and bridge 302 that can span the width of platform 212 and that can be configured to slide on rails 300A and 300B. Carriage 304 can be coupled to bridge 302 and can be configured to move along bridge 302 across the width of platform 212. Bridge 302 and carriage 304 can be operatively coupled to appropriate motors and power sources, as well as control panel 214, to move according to a protocol. Carriage 304 can be coupled to one or more instruments for performing the protocol. In the illustrated example, carriage 304 is coupled to pipettor 306. Pipettor 306 can be configured to move axially into liquid vial 240G when moved into position to align with axis B.

Once preprocessing is complete, the lab technician can uncap the reagent vials, load the vials into receptacles 230 of carousel 204, and set the caps adjacent to the vials on carousel 204 at pockets 238. For example, cap 248G can be removed from vial 240G and placed in pocket 238G. If any of the caps are tethered to their respective tube, the lab technician can cut the tether to permit the cap to be separated from the tube which will avoid potential crashes with pipettor 306. Sleeve 246G can extend along the length of vial 240G, across a label for vial 240G, up to knurling 249G. Sleeve 246G can stop short of knurling 249G to allow grasping of vial 240G below threading where cap 248G is configured to couple to avoid cross-contamination. However, sleeve 246G is of sufficient length to hold liquid vial 240G in an upright position along, or substantially along, axis B.

As mentioned, pedestal 244G can comprise a pedestal upon which vial 240G can rest and pedestal 244G can be configured to rotate under power from motor 308 or another motor (e.g., motor 248B of FIG. 4B). Pedestal 244G can additionally include flange 312G for receiving sleeve 246G. Pedestal 244G can sit within well 314G of base 232. Well 314G can be a location within base 232 where pedestal 244G can be positioned to interface with motor 308, such as through a shaft or magnetic coupling. In examples, motor 308 can comprise a portion of a turntable system. Well 314G can be larger than pedestal 244G. Pedestal 244G can be configured to be releasably attached to base 232. As such, carousel 204 can be configured to receive pedestals of different sizes to receive vials or components of the protocol of different sizes. For example, different sized pedestals can have different sized flanges to receive different sized sleeves or tubes. The sleeve size can be closely matched to the vial size in order orient the vial in an upright position along axis B to facilitate pipetting, for example. The pedestals can be configured to be held in place, such as via a snap feature, to provide tactile feedback to an operator that the pedestal is firmly attached. Different sized pedestals can be categorized, such as with color coding or some other system identification system. Fluid handling system 200 can be configured to read coding on each pedestal, or on carousel 204, for cross-referencing with a protocol stored in computer readable medium 108B, such as can be entered by an operator at control computer 108.

The lab technician can initiate the run of the preconfigured batch on control panel 214 or control panel 282, and then load carousel 204 onto housing 202. The lab technician can close cover panel 210 of housing 202. Additionally, carousel 204 can be provided with a cover or lid. The cover can comprise a cylindrical wall to engage base 232 and surround receptacles 230 and a top panel to oppose base 232 and encapsulate receptacles 230. The cover can protect reagents loaded into receptacles 230 from environmental contaminates and can aid in transport of carousel 204, particularly if carousel 204 is configured to not have extension 234 and knob 236. The top panel can include openings or access points, such as slots, to allow for access by instrumentation, such as pipettor 306 and to permit imaging device 206 to view reagent vials located under the cover. The cover can be configured to remain stationary while carousel 204 can rotate. In other examples, the cover can be configured to rotate with carousel 204.

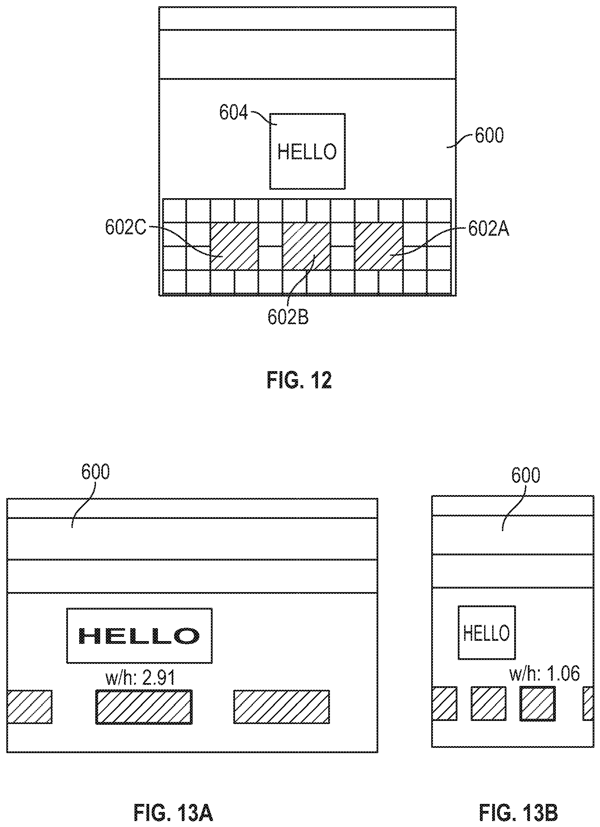

Once the cover for carousel 204 is closed, system 200 can use imaging device 206 to perform slit-scan photography in conjunction with rotation of receptacles 230. For example, receptacle 230G can comprise pedestal 244G and sleeve 246G. Pedestal 244G can be coupled to motor 308, or some other spinning mechanism, to obtain an "unrolled" image of vial 240G. Pedestal 244G can rotate about axis B, which can cause vial 240G to additionally rotate about axis B. As such, a center of vial 240G can be located a constant distance from imaging device 206 to facilitate slit-scan imaging. The "unrolled" image can run through an algorithm to decipher indicia, or visual indicators, on a label of vial 240G, such as barcodes, Universal Product Codes, text, alpha-numeric characters, graphical pictures, pictographic characters, visual pictures, QR codes, data matrix codes, user-added information (such as hand written notes, marks or distinguishing features) symbols and the like. Rotational speed of each of the pedestals can be calibrated to the imaging device, e.g. a shutter speed or panning speed, using a geometric calibration label (e.g., label 600 of FIG. 12), wherein geometric shapes (e.g., squares 602A - 602C of FIG. 12) and a reference image (e.g., text 604 of FIG. 12) on the calibration label can be recorded by the imaging device while the pedestal is rotating and the speed of the pedestal can be adjusted until the geometric shapes come into focus.

FIG. 12 illustrates example calibration label 600 comprising squares 602A -602C and reference text 604. As described above, each individual reagent vial can be rotated at a speed commensurate with the frame rate of the camera obtaining an image of the label attached thereto. If the motor spins too fast, the camera will not be able to sample fast enough to peel the label off for every degree, hence the result label will look compressed. On the other hand, if the motor spins too slow, the camera will potentially take picture of the same degree multiple times, thus resulting the label look stretched. The distortion of the label will cause problem on the accuracy of OCR (Optical Character Recognition). The information being deciphered from the indicia can include vendor identification, reagent names, lot numbers, temperatures, protocols and the like

FIG. 13A shows an example of a reagent vial being rotated too slow for a camera. Squares 602A - 602C appear as laterally elongated rectangles having a width to height ratio of 2.91, while text 604 becomes widened. If the width of the rectangle in the image is greater than its height, then the rotational speed is too low. Conversely, if the height is greater than the width, then the speed is too high. The measured ratio of height to width provides a direct indication of the change in speed required for calibration.

FIG. 13B shows an example of a reagent vial being rotated at nearly the same rate as the camera such that squares 602A - 602C are nearly perfect squares, e.g., have a width to height ratio of 1.06.

Additionally, as discussed above, instead of using a single camera to view rotated vials, multiple cameras can be used to view different sides or perspectives of a stationary vial such that multiple images can be compiled or quilted together to obtain a complete label view.

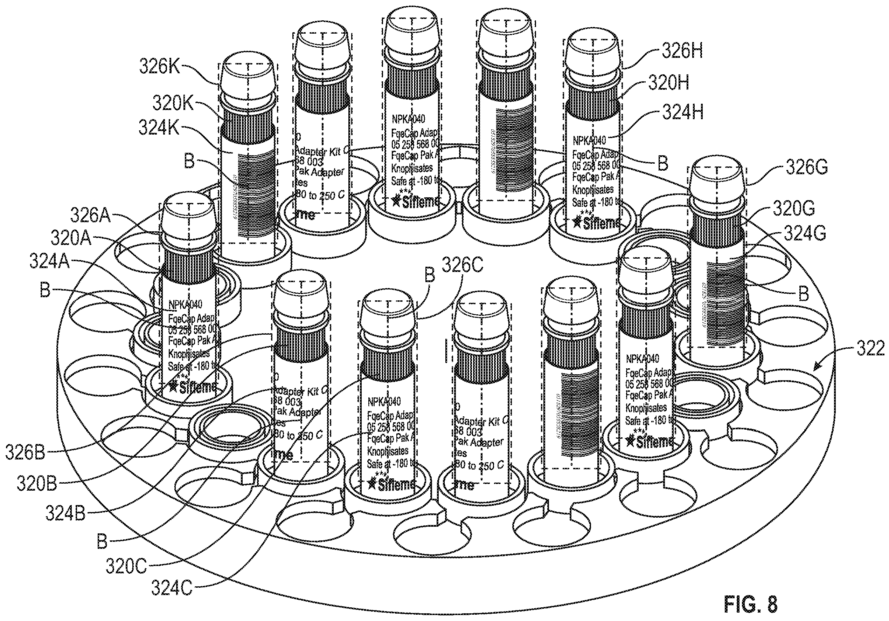

FIG. 8 is a perspective view of a plurality of liquid vials 320A - 320L loaded into carousel 322. Carousel 322 can be configured similar to any of the carousel described herein such as carousel 204 and carousel 250. Vials 320A - 320L can each have a respective one of labels 324A - 324L. Each of labels 324A - 324L can have different types of indicia located thereon, such as bar codes, lot numbers, reagent names and the like.

Carousel 322 can be rotated to position each of liquid vials 320A - 320L into view of imaging device 206 (FIG. 7). Imaging device 206 can have a view of all liquid vials 320A - 320L at one time. For example, for each of liquid vials 320A - 320L, imaging device 206 can have region of interest 326A - 326L of the field of view. Each region of interest can be produced with a slit or a virtual slit for imaging device 107, for example. Each of regions of interest 326A - 326L can be centered about axis B for each receptacle that liquid vials 320A - 320L are loaded into. Each of regions of interest 326A - 326L can correspond to an image taken of liquid vials 320A - 320L through a slit in a camera screen or shutter. With each vial being viewed by imaging device 206, motor 308 can rotate one or more pedestals so that imaging device 206 can take one or more images of labels 324A - 324L. This allows, for the illustrated example 12, and up to 18, label images to be created at the same time, greatly reducing the time required. In other examples, the field of view of imaging device 107 can be zoomed in or focused onto each of regions of interest 326A - 326L individually.

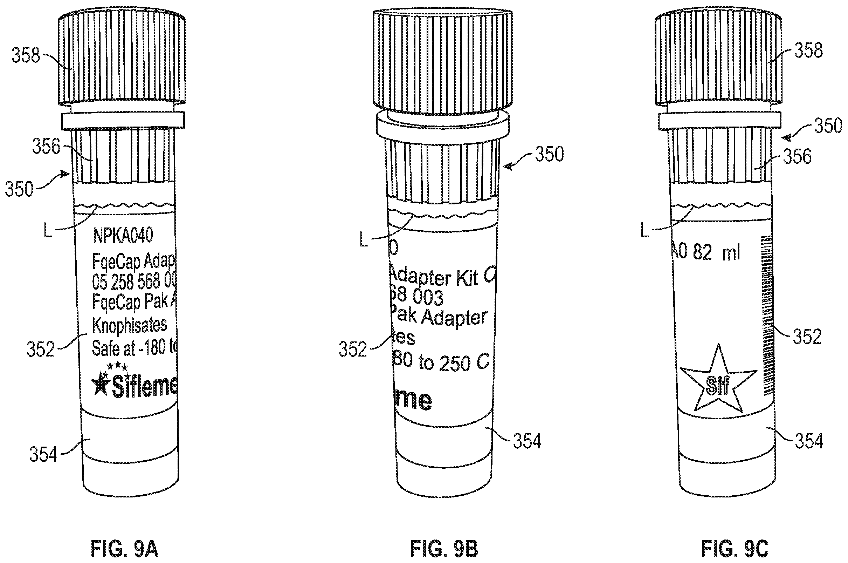

FIGS. 9A - 9C are views of rectangular label 352 wrapped around cylindrical liquid vial 350. Liquid vial 350 can comprise tube 354, knurling 356 and cap 358. Multiple images of label 352 can be taken as tube 354 is rotated. Alternatively, a single continuous image can be taken as tube 354 is rotated using slit-scan technology. Thus, for example, individual images, such as those shown in FIGS. 9A - 9C can be pieced together to form a complete view of label 352.

Information from label 352 can be compared to information stored in computer readable medium 108B or elsewhere in processing system 100. Information can be loaded into computer readable medium 108B, such as from network 216 that contains label information from different manufacturers of, for example, reagents used in liquid vial 350. Thus, computer readable medium 108B can be provided with manufacturer names, reagent names in long and short formats, lot numbers, storage temperature information, and the like. Thus, processing system 100 can be provided with a library of information for a plurality of protocols from a plurality of manufacturers or vendors. In examples, operators of processing system 100 can load into computer readable medium 108B information for library construction kits from manufacturers that the operator anticipates running. As such, once a protocol is entered into processing system 100, processing system will have access to information to decipher reagent vials intended to be used therein.

Additionally, system 100 or 200 can be configured to read liquid level L within liquid vial 350. In an example, images of liquid vial 350 can be scanned to determine a liquid level. Additionally, pipettor 306 can be configured to have a sensor, such as an acoustic sensor, for level sensing.

After system 100 or system 200 compares known information from imaging device 107 or imaging device 206, the system will know what reagents have been loaded into carousel 204 just before a protocol is about to be executed. Systems 100 and 200 can be configured such that the order or location in which the reagent vials are loaded onto carousel 204 does not matter. The software can cross-check the reagents loaded with the expected reagents for the batch configuration according to the protocol programmed into control panel 282. If all the reagents loaded were expected, transport device 141 and processing apparatus 101 can begin aliquoting from the reagent vials to an internal temperature-controlled storage location. The volume to aliquot is known by the system based on the batch configuration the lab technician setup from control panel 282. Before each aliquot, liquid-level sensing can be performed to ensure adequate volume for the batch is present. Such liquid-level sensing can be performed using, for example, an acoustic sensor positioned on pipettor 306. Additionally, imaging of the reagent vials using imaging device 107 or imaging device 206 can be used to determine levels, such as by comparing images of the actual liquid levels to graduation marks on individual reagent vials.

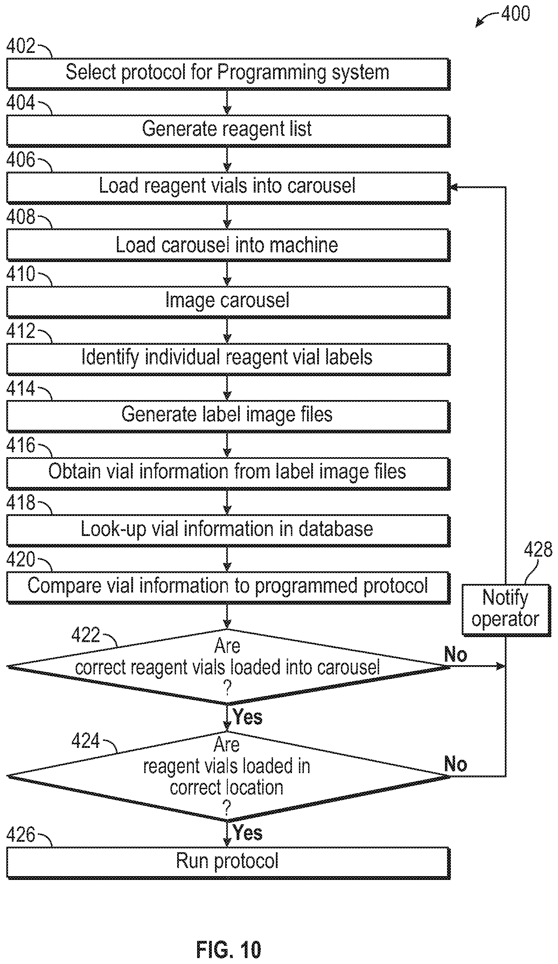

FIG. 10 is a line diagram illustrating method 400 for identifying reagents loaded into a fluid handling system.

At step 402, a programmed protocol can be selected for running on a fluid handling system. For example, an operator can use control panel 282 to enter or select a protocol 108F stored in computer readable medium 108B. The protocol can include steps for processing and analyzing biological samples, such as the preparation of libraries of DNA fragments including next-generation sequencing (NGS) libraries, by using a plurality of reagents.

At step 404, a listing of reagents used in the library preparation can be input into the system. The listing of reagents can include the reagent name and volumes of each reagent to be used in the protocol. The listing of reagents can be generated by the programmed protocol or can be manually entered by a user.

At step 406, reagent vials including the reagents in the listing of reagents can be loaded into the system. For example, reagent vials can be loaded into sleeves 266A - 266E of carousel 204. The reagent vials can be marked by an operator to provide a unique tag, such as to distinguish identical or nearly identical vials of the same material or liquid. In examples, the reagent vials can be loaded into any position on carousel 204, or can be loaded into specific, numerically identified positions in carousel 204. Caps from the reagent vials can be removed and secured to carousel 204 proximate the reagent vials for later resealing of the reagent vials.

At step 408, carousel 204 can be loaded into the system. For example, carousel 204 can be loaded onto deck 220 at location L28. Carousel 204 can be loaded into housing 202 to interact with motor 308 that can cause rotation of carousel 204 about axis A.

At step 410, carousel 204 can be imaged with imaging device 107 or imaging device 206. Reagent vials within sleeves 246A - 246E can be imaged with the imaging device. The images can be taken through transparent material forming sleeves 246A - 246E. The reagent vials can be rotated on pedestals 244A - 244E supporting sleeves 246A - 246E. Images of carousel 204 can be used to determine the presence of the correct number of vials has been loaded into carousel 204. Likewise, images of carousel 204 can be used to determine if caps of each vial have been removed.

At step 412, individual labels of the reagent vials can be identified in one or more images of carousel 204. As carousel 204 is imaged in step 410, the imaging device can be aimed at each reagent vial or carousel 204 can be rotated to position each reagent vial in the field of view of the imaging device or the imaging device can have a specific region of interest for each reagent vial in a single field of view. For example, slit-scan images can be obtained of the labels as the reagent vials are rotated by pedestals 244A - 244E. As mentioned, alternatives to slit-scan imaging can be used, such as panoramic, stitched, unrolled, quilted images and the like.

At step 414, image files of the individual labels can be generated. A plurality of individual images can be pieced together, or a single time-lapsed image can be processed to generate an image wherein information displayed on the label can be read an interpreted via the system and via a human operator. For example, the slit-scan images can be used to generate a complete view of the labels that are wrapped around the reagent vials and are therefore not visible in one view of the imaging device.

At step 416, information from the label images can be obtained, such as by performing character recognition algorithms. For example, barcodes, Universal Product Codes, text, alpha-numeric characters, graphical pictures, pictographic characters, visual pictures and symbols can be obtained. Such information can comprise vendor identification, reagent names, lot numbers, temperatures, protocols and the like. Furthermore, at step 416 or step 414, image files of each label can be evaluated for clarity. If any of the image files are deemed vague, fuzzy or out of focus, additional images can be taken. Additionally, multiple images can be taken at step 412 before evaluating image file clarity and the plurality of images of carousel 204 can be evaluated to determine the clearest picture to be used for information identification. If information cannot be determined from the images of carousel 204 of the generated images files of each label, the system can provide a warning to a user to indicate that a new reagent vial should be loaded into carousel 204 that can be better read. At such point, a voting process can be initiated. Otherwise, the user can clear the warning and decided to proceed with the already installed reagent vial.

The voting process can be used to produce higher accuracy in interpreting image information, rather than for producing higher image quality. The voting process can involve rotating the tubes several rotations and slit scanning each tube multiple times. Because of noise, the character recognition (e.g., Optical Character Recognition) or visual indicator recognition results described herein can sometimes not be exactly the same for each rotation. The multiple images of each slit scan of each tube can be correlated for each string on the label and a voting mechanism can be used to decide which candidate has the highest vote. For example, a label can be provided with part number "KE8443" printed on the label. The visual indicator recognition results may return "KE8443," "KEB443," or "KE8443" for three different slit scans. The voting result of those three candidates would yield the correct number KE8443 since two of the three slit scans match the part number printed on the label.

In this way, we scan and OCR the tube label independently and improve the accuracy in a way similar to binomial distribution. The final accuracy after voting will be provided by Equation [1]:

$$P_{vote} = \sum_{k=\lfloor \frac{n}{2} \rfloor + 1}^{n} \binom{n}{k} p^k (1-p)^{n-k}$$

$$[\text{Equation } [1]]$$

In Equation [1]:

$n$ is the number of experiments. In this case the number of times we rotate and slit scan the tube;
$p$ is the probability of correct OCR; and
$k$ is the number of correct OCR.

For example, if each time the chance that a character string of a label is correctly recognized is 0.8 and the label is scanned three times, the final probability of getting a correct string is $\binom{3}{2}0.8^2 0.2^1 + \binom{3}{3}0.8^3 = 0.896$. If the label is scanned five times, the final probability is 0.94208.

At step 418, information from the images can be looked-up in a database. The database can be pre-populated with information from manufacturers of reagent vials, such as vendor identification, reagent names, lot numbers, temperatures, protocols and the like. Such information can be entered into the system via an operator at a system interface or can be downloaded from a network.

At step 420, information from the reagent vial labels can be compared with information from the protocol programmed into the system at step 402.

At step 422, the system can determine if the correct reagent vials are loaded into carousel 204 based on the comparison at step 410. If the correct reagent vials are loaded into carousel 204, the process can continue to step 424. If incorrect or unexpected reagent vials are loaded into carousel 204, the process can continue to step 428.

At step 424, the system can determine if the reagent vials are loaded into the correct locations in carousel 204 based on the comparison at step 410. If the reagent vials are loaded into the correct positions in carousel 204, the process can continue to step 426. If the reagent vials are loaded into incorrect positions in carousel 204, the process can continue to step 428. Step 424 can be an optional step because reagent vials entered into the system at step 402 can be recognized at step 418 and the protocol can be adapted by the system to access the proper reagent vial when needed regardless of the location in carousel 204.

At step 426, the protocol entered at step 402 can be run by the system. The system can prevent access to carousel 204 to prevent reagent vials from being changed out.

At step 428, the operator of the system can be notified of an error or a potential error determined at one or both of steps 422 and 424. For example, audio or visual alarms can be provided by the system. Additionally, the system can present instructions for remedying the error to the operator at a display screen. After the deficiencies are corrected, the system can continue to execute the steps of method 400

The present disclosure describes various systems, assemblies, devices and methods for automated reagent identification for material handling systems that can reduce set-up time and errors in setting up material handling systems for performing procedures programmed into the material handling systems. For example, if the lab technician loaded a reagent that was unexpected, an on-instrument screen, such as at controller 214, or an off-instrument screen, such as at control panel 282, can notify the lab technician, such as via a visual alarm or alert, of the error. Additionally, various audible alarms and alerts can be generated. Additionally, if the lab technician forgot or otherwise failed to load a reagent, the system can provide a notification.

If the system cannot identify a reagent based on the obtained imaging of the labels of the reagent vials, the system can provide an instruction at controller 214 or control panel 282 requesting the lab technician manually identify the reagent in question based on a pick-list of expected reagents. Such errors can arise due to poor label quality, wet labels, handwritten labels, etc.

In various examples, the library of manufacturer or vendor information can be provided to the system via network connection, such as network 216. If network connectivity fails and the imaging devices cannot decipher information of a particular reagent label, a user can manually aliquot remaining reagents by hand to internal system locations based on prompting from the system, the user can manually identify each reagent on the carousel using the on-instrument screen, or the system can instruct the user which vial should be loaded at which position.

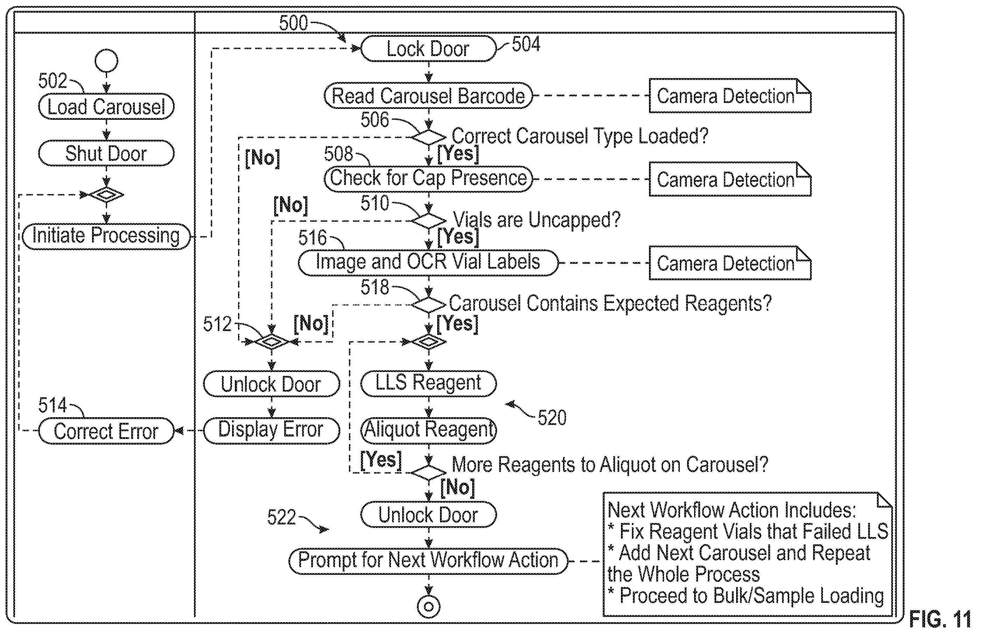

The imaging devices of the system can additionally be used to determine if caps have been left on the reagent vials, either threaded onto the tubes or attached via a tether. In other examples, a sensor on pipettor 306 can be used to detect a cap. The system can provide appropriate alarms or notifications if a cap is detected. Cap detection can use a neural network approach where a picture of each reagent vial is cropped from the deck camera frame, then fed into a neural network which output three classes: vial with a cap, vial without a cap, no vial. FIG. 11 shows an example of workflow map 500 for system 200. At step 502, carousel 204 can be loaded and door 210 can be shut. At step 504, door 210 can be locked and camera 206 can be activated to read information from carousel 204. At step 506 a decision can be made to determine if the correct carousel is loaded per the programmed protocol. At step 508, system 200 can check for the presence of caps on the reagent vials loaded into carousel 204. If caps are detected, door 210 can be unlocked and/or an error can be displayed for a user at step 512. At step 514, the error can be corrected and system 200 can return to step 504. At step 516, system 200 can use camera 206 to image individual reagent vials loaded into carousel 204. At step 518, system 200 can check the protocol to see if proper reagent vials have been loaded into carousel 204. If improper reagent vials are loaded therein, system 200 can move to step 512 to take corrective action. At step 520, system 200 can execute the protocol. At step 522, the protocol can be concluded and door 210 can be unlocked and opened and system 200 can be prepared for subsequent workflow actions.

In various examples, the system can be configured to maintain housing 202 in a sealed state, such as by preventing cover panel 210 from opening, until after a protocol has been completed in order to prevent a user from changing a vial on the carousel after it has been loaded and identified by the instrument. This can help ensure that the system has chain of custody of the reagents while on the system.

The system can further be configured to use imaging of the reagent vials to determine if the lab technician has placed a vial in a wrong-sized scanning tube such that, for example, the vial will not stand upright, thereby preventing instrumentation from entering the vial or preventing proper slit-scan imaging. In such scenarios, the system can notify the user of the error. Proper tube size can be programmed into the protocol such that the system knows what tube sizes are expected. Additionally, reagent vial identification obtained by the imaging device and color identification or barcoding of the pedestal can be used to detect such errors.

Furthermore, reagent vial volumes can be determined with the system to identify if the loaded reagent vial does not contain enough volume to meet the needs of the programmed protocol. This can be detected at reagent aliquot time. If such scenarios are detected, the system can prompt the user to load another vial or refill a vial, such as from a reagent of the same batch. Because of the long lead time (thaw, vortex, centrifuge) the earlier we can inform the user the better. If the error is detected mid-aliquot, the system should inform the user and move on with pipetting the next item on the carousel. Because reagent loading can be an interactive workflow, the user will be near the system to address the error.

For lot tracking, images of the reagent vial labels obtained with the imaging devices can be used to identify lot numbers. However, because there can sometimes be no built-in confirmation of lot number on the vial, the system cannot always be sure that the imaging identified the lot number properly. Therefore, lot numbers can be verified by the user. For example, the lot number verification can occur by the lab technician at any remote workstation in the lab where the lab technician can review images of each vial, along with the lot number identified by the imaging. The lab technician can then confirm the lot number was imaged and deciphered correctly or edit the number to be recorded in the sample log.

Various Notes

The above detailed description includes references to the accompanying drawings, which form a part of the detailed description. The drawings show, by way of illustration, specific embodiments in which the invention can be practiced. These embodiments are also referred to herein as "examples." Such examples can include elements in addition to those shown or described. However, the present inventor also contemplates examples in which only those elements shown or described are provided. Moreover, the present inventor also contemplates examples using any combination or permutation of those elements shown or described (or one or more aspects thereof), either with respect to a particular example (or one or more aspects thereof), or with respect to other examples (or one or more aspects thereof) shown or described herein.

In the event of inconsistent usages between this document and any documents so incorporated by reference, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or nonvolatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention is defined by the appended claims.

## Claims

1.  A fluid handling system (100, 200) for processing a sample using a reagent kit including a plurality of reagent vessels (240, 320, 350), each of the plurality of reagent vessels (240, 320, 350) containing a corresponding liquid reagent, the fluid handling system (100, 200) comprising:

    a non-transitory, computer-readable storage medium including a programmed protocol (108F) for processing the sample, the programmed protocol (108F) including a listing of reagents for processing the sample,
    a vessel holder (204) configured to receive the plurality of reagent vessels (240, 320, 350) at a corresponding plurality of locations (230), each reagent vessel (240, 320, 350) having visual indicators of identifying features located on an identification label (324, 352, 600);
    an imaging device (107, 206) configured to create an image of each of the plurality of reagent vessels (240, 320, 350) loaded into the vessel holder (204); and
    a processor (108A, 214) configured to:

    recognize the visual indicators in each image and to identify the reagent in each of the plurality of reagent vessels (240, 320, 350) based on the recognized visual indicators;
    determine if appropriate reagents have been loaded into the vessel holder (204) as specified in the listing of reagents; and
    adapt the programmed protocol (108F) when the reagent vessels are loaded into incorrect positions to access the proper reagent vessel (240, 320, 350) when needed regardless of the location in the vessel holder (204).

2.  The fluid handling system of claim 1, wherein the programmed protocol (108F) further specifies an expected location for each of the plurality of reagent vessels (240, 320, 350) for loading into the vessel holder (204), wherein the processor is further configured to determine if a loaded location of the reagent vessel for each identified reagent corresponds to the expected location for that reagent vessel as specified in the programmed protocol.

3. The fluid handling system of any of claims 1 to 2, wherein each of the plurality of reagent vessels (240, 320, 350) loaded into the vessel holder (204) is rotatable along a central axis (A) of the reagent vessel, and preferably wherein the vessel holder (204) is a reagent carousel rotatable along a central axis (A) of the reagent carousel.

4. The fluid handling system of claim 3, wherein the imaging device (107, 206) is configured to produce a composite image of each of the plurality of reagent vessels (240, 320, 350) via slit-scan imaging.

5. The fluid handling system of claim 4, wherein the processor is further configured to calibrate a rotational speed of individual reagent vessels (240, 320, 350) in the vessel holder (204) using a geometric calibration label.

6. The fluid handling system of any of claims 1 to 5, wherein the imaging device (107, 206) has a field of view configured to simultaneously image the plurality of reagent vessels (240, 320, 350) in the vessel holder (204).

7. The fluid handling system of any of claims 1 to 6, wherein the non-transitory, computer-readable storage medium includes a database including visual indicators for reagent vessels (240, 320, 350) from different manufacturers including a lot number and an expiration date.

8. The fluid handling system of claim 7, wherein the processor (108A, 214) is configured to compare visual indicators in the database to decipher the visual indicators in the images, and preferably wherein the processor is configured to compare the deciphered visual indicators in the images to information in the programmed protocol (108F).

9. The fluid handling system of any of claims 1 to 8, wherein:

   the fluid handling system is configured to determine a level of liquid within a reagent vessel (240, 320, 350); and
   the processor (108A, 214) is further configured to confirm sufficient volume of liquid is contained in the reagent vessel (240, 320, 350) according to the programmed protocol (108F).

10. The fluid handling system of any of claims 1 to 9, wherein the recognized visual indicators comprise alphanumeric characters.

11. The fluid handling system of any of claims 1 to 10, further comprising:

   a deck (105) having source locations and destination locations; and
   a pipettor (141) configured to aspirate liquid from source locations on the deck and to dispense the aspirated liquids to destination locations on the deck,
   wherein the programmed protocol (108F0 further specifies a destination location for the corresponding reagent in each of the plurality of reagent vessels (240, 320, 350) loaded into the vessel holder (204), and
   wherein the processor is further configured, for each of the plurality of reagent vessels (240, 320, 350) loaded into the vessel holder (204), to:

   determine the destination location specified for the identified reagent in the programmed protocol (108F);
   direct the pipettor (141) to aspirate a volume of liquid from the reagent vessel in the vessel holder, and direct the pipettor to dispense the aspirated volume at the determined destination location for the identified reagent.

12. The fluid handling system of claim 11, wherein the processor is further configured, for each reagent vessel loaded into the vessel holder, to direct the pipettor to aspirate the volume of liquid from the reagent vessel and to dispense the aspirated volume at the determined destination location regardless of the position in the vessel holder into which the reagent vessel has been loaded.

13. The fluid handling system of any of claims 1 to 12, wherein the processor is further configured to determine, from images of the vessel holder, if caps (248) have been removed from the reagent vessels (240), and to provide an alarm if a cap has not been removed from a reagent vessel.

14. A method of identifying reagents loaded into a fluid handling system, the method comprising:

programming a protocol (108F) for preparing a sample into a controller (214) of the fluid handling system;

loading multiple reagent vessels (240, 320, 350) into a vessel holder (204) of the fluid handling system;

imaging individual labels of the multiple reagent vessels with an imaging device (107, 206) to produce label images;

comparing information in the label images to identification information located in a database in communication with the controller;

determining if appropriate reagents have been loaded into the vessel holder (204) to perform the protocol; and

adapting the protocol when the reagent vessels are loaded into incorrect positions to access the proper reagent vessel (240, 320, 350) regardless of the location in the vessel holder (204).

## Patentansprüche

1. Fluidhandhabungssystem (100, 200) zur Verarbeitung einer Probe unter Verwendung eines Reagenzienkits einschließlich einer Vielzahl von Reagenzbehältern (240, 320, 350), wobei jede der Vielzahl von Reagenzbehältern (240, 320, 350) ein entsprechendes flüssiges Reagenz aufweist, wobei das Fluidhandhabungssystem (100, 200) umfasst:

   ein nicht-transitorisches, computerlesbares Speichermedium einschließlich eines programmierten Protokolls (108F) zur Verarbeitung der Probe, wobei das programmierte Protokoll (108F) eine Liste von Reagenzien zur Verarbeitung der Probe einschließt,
   einen Behälterhalter (204), der so konfiguriert ist, dass er die Vielzahl von Reagenzbehältern (240, 320, 350) an einer entsprechenden Vielzahl von Stellen (230) aufnimmt, wobei jeder Reagenzbehälter (240, 320, 350) visuelle Indikatoren mit Identifizierungsmerkmalen aufweist, die sich auf einem Identifizierungsetikett (324, 352, 600) befinden;
   eine Bildgebungsvorrichtung (107, 206), die so konfiguriert ist, dass sie ein Bild von jedem der Vielzahl von Reagenzbehältern (240, 320, 350) erzeugt, die in den Behälterhalter (204) geladen sind; und
   einen Prozessor (108A, 214), der so konfiguriert ist, dass er:

      die visuellen Indikatoren in jedem Bild erkennt und das Reagenz in jedem der Vielzahl von Reagenzbehältern (240, 320, 350) auf der Grundlage der erkannten visuellen Indikatoren identifiziert;
      bestimmt, ob geeignete Reagenzien in den Behälterhalter (204) geladen wurden, wie in der Liste der Reagenzien spezifiziert; und
      das programmierte Protokoll (108F) anpasst, wenn die Reagenzbehälter in falsche Positionen geladen wurden, um bei Bedarf auf den richtigen Reagenzbehälter (240, 320, 350) zuzugreifen, unabhängig von der Stelle in dem Behälterhalter (204).

2. Fluidhandhabungssystem nach Anspruch 1, wobei das programmierte Protokoll (108F) weiter eine erwartete Stelle für jeden der Vielzahl von Reagenzbehältern (240, 320, 350) zum Laden in den Behälterhalter (204) spezifiziert, wobei der Prozessor weiter so konfiguriert ist, dass er bestimmt, ob eine Ladestelle des Reagenzbehälters für jedes identifizierte Reagenz der erwarteten Stelle für diesen Reagenzbehälter entspricht, wie sie in dem programmierten Protokoll spezifiziert ist.

3. Fluidhandhabungssystem nach einem der Ansprüche 1 bis 2, wobei jedes der Vielzahl von Reagenzbehältern (240, 320, 350), die in den Behälterhalter (204) geladen sind, entlang einer Mittelachse (A) des Reagenzbehälters drehbar ist, und wobei vorzugsweise der Behälterhalter (204) ein Reagenzkarussell ist, das entlang einer Mittelachse (A) des Reagenzkarussells drehbar ist.

4. Fluidhandhabungssystem nach Anspruch 3, wobei die Bildgebungsvorrichtung (107, 206) so konfiguriert ist, dass sie ein zusammengesetztes Bild jedes der Vielzahl von Reagenzbehältern (240, 320, 350) mittels Schlitzabtastungsbildgebung erzeugt.

5. Fluidhandhabungssystem nach Anspruch 4, wobei der Prozessor weiter so konfiguriert ist, dass er eine Drehgeschwindigkeit einzelner Reagenzbehälter (240, 320, 350) in dem Behälterhalter (204) unter Verwendung einer geometrischen Kalibrierungsmarkierung kalibriert.

6. Fluidhandhabungssystem nach einem der Ansprüche 1 bis 5, wobei die Bildgebungsvorrichtung (107, 206) ein Sichtfeld aufweist, das so konfiguriert ist, dass es gleichzeitig die Vielzahl von Reagenzbehältern (240, 320, 350) in dem Behälterhalter (204) abbildet.

7. Fluidhandhabungssystem nach einem der Ansprüche 1 bis 6, wobei das nichttransitorische, computerlesbare Speichermedium eine Datenbank einschließlich visueller Indikatoren für Reagenzbehälter (240, 320, 350) von verschiedenen Herstellern einschließlich einer Chargennummer und eines Verfallsdatums einschließt.

8. Fluidhandhabungssystem nach Anspruch 7, wobei der Prozessor (108A, 214) so konfiguriert ist, dass er visuelle Indikatoren in der Datenbank vergleicht, um die visuellen Indikatoren in den Bildern zu entschlüsseln, und wobei der Prozessor vorzugsweise so konfiguriert ist, dass er die entschlüsselten visuellen Indikatoren in den Bildern mit Informationen in dem programmierten Protokoll (108F) vergleicht.

9. Fluidhandhabungssystem nach einem der Ansprüche 1 bis 8, wobei:

   das Fluidhandhabungssystem so konfiguriert ist, dass es einen Fluidstand innerhalb eines Reagenzbehälters (240, 320, 350) bestimmt; und
   der Prozessor (108A, 214) weiter so konfiguriert ist, dass er entsprechend dem programmierten Protokoll (108F) bestätigt, dass in dem Reagenzbehälter (240, 320, 350) eine ausreichende Flüssigkeitsmenge enthalten ist.

10. Fluidhandhabungssystem nach einem der Ansprüche 1 bis 9, wobei die erkannten visuellen Indikatoren alphanumerische Zeichen umfassen.

11. Fluidhandhabungssystem nach einem der Ansprüche 1 bis 10, weiter umfassend:

   ein Deck (105) mit Quellstellen und Zielstellen; und
   ein Pipettierer (141), der so konfiguriert ist, dass er Flüssigkeit aus Quellstellen auf dem Deck ansaugt und die angesaugten Flüssigkeiten an Zielstellen auf dem Deck abgibt,
   wobei das programmierte Protokoll (108F) weiter eine Zielstelle für das entsprechende Reagenz in jedem der Vielzahl von Reagenzbehältern (240, 320, 350), die in den Behälterhalter (204) geladen sind, spezifiziert, und
   wobei der Prozessor weiter so konfiguriert ist, dass er für jeden der Vielzahl von Reagenzbehältern (240, 320, 350), die in den Behälterhalter (204) geladen sind:

      die in dem programmierten Protokoll (108F) für das identifizierte Reagenz spezifizierte Zielstelle bestimmt;
      den Pipettierer (141) anweist, ein Flüssigkeitsvolumen aus dem Reagenzbehälter in dem Behälterhalter anzusaugen, und
      den Pipettierer anweist, das angesaugte Volumen an der bestimmten Zielstelle für das identifizierte Reagenz abzugeben.

12. Fluidhandhabungssystem nach Anspruch 11, wobei der Prozessor weiter so konfiguriert ist, dass er für jeden in den Behälterhalter geladenen Reagenzbehälter den Pipettierer anweist, das Flüssigkeitsvolumen aus dem Reagenzbehälter anzusaugen und das angesaugte Volumen an der bestimmten Zielstelle abzugeben, unabhängig von der Position in dem Behälterhalter, in der der Reagenzbehälter geladen wurde.

13. Fluidhandhabungssystem nach einem der Ansprüche 1 bis 12, wobei der Prozessor weiter so konfiguriert ist, dass er anhand von Bildern des Behälterhalters bestimmt, ob Kappen (248) von den Reagenzbehältern (240) entfernt wurden, und einen Alarm bereitstellt, wenn eine Kappe nicht von einem Reagenzbehälter entfernt wurde.

14. Verfahren zum Identifizieren von in einem Fluidhandhabungssystem geladenen Reagenzien, wobei das Verfahren umfasst:

   Programmieren eines Protokolls (108F) zum Vorbereiten einer Probe in eine Steuereinheit (214) des Fluidhandhabungssystems;
   Laden mehrerer Reagenzbehälter (240, 320, 350) in einen Behälterhalter (204) des Fluidhandhabungssystems;
   Abbilden einzelner Markierungen der mehreren Reagenzbehälter mit einer Bildgebungsvorrichtung (107, 206), um Markierungsbilder zu erzeugen;
   Vergleichen von Informationen in den Markierungsbildern mit Identifizierungsinformationen, die sich in einer mit der Steuereinheit verbundenen Datenbank befinden;
   Bestimmen, ob geeignete Reagenzien in den Behälterhalter (204) geladen wurden, um das Protokoll durchzuführen; und

Anpassen des Protokolls, wenn die Reagenzbehälter in falsche Positionen geladen wurden, um auf den richtigen Reagenzbehälter (240, 320, 350) zuzugreifen, unabhängig von der Stelle in dem Behälterhalter (204).

**Revendications**

1.  Système de manipulation de fluide (100, 200) pour traiter un échantillon en utilisant un kit de réactifs incluant une pluralité de récipients de réactif (240, 320, 350), chacun de la pluralité de récipients de réactif (240, 320, 350) contenant un réactif liquide correspondant, le système de manipulation de fluide (100, 200) comprenant :

    un support de stockage non transitoire lisible par ordinateur incluant un protocole programmé (108F) pour traiter l'échantillon, le protocole programmé (108F) incluant une liste de réactifs pour traiter l'échantillon,
    un porte-récipient (204) configuré pour recevoir la pluralité de récipients de réactif (240, 320, 350) à une pluralité correspondante d'emplacements (230), chaque récipient de réactif (240, 320, 350) présentant des indicateurs visuels de caractéristiques d'identification situées sur une étiquette d'identification (324, 352, 600) ;
    un dispositif d'imagerie (107, 206) configuré pour créer une image de chacun de la pluralité de récipients de réactif (240, 320, 350) chargés dans le porte-récipient (204) ; et
    un processeur (108A, 214) configuré pour :

    reconnaître les indicateurs visuels dans chaque image et pour identifier le réactif dans chacun de la pluralité de récipients de réactif (240, 320, 350) sur la base des indicateurs visuels reconnus ;
    déterminer si des réactifs appropriés ont été chargés dans le porte-récipient (204) comme spécifié dans la liste de réactifs ; et

    adapter le protocole programmé (108F) lorsque les récipients de réactif sont chargés dans des positions incorrectes pour accéder au récipient de réactif approprié (240, 320, 350) lorsque c'est nécessaire indépendamment de l'emplacement dans le porte-récipient (204).

2.  Système de manipulation de fluide selon la revendication 1, dans lequel le protocole programmé (108F) spécifie en outre un emplacement attendu pour chacun de la pluralité de récipients de réactif (240, 320, 350) pour un chargement dans le porte-récipient (204), dans lequel le processeur est en outre configuré pour déterminer si un emplacement chargé du récipient de réactif pour chaque réactif identifié correspond à l'emplacement attendu pour ce récipient de réactif tel que spécifié dans le protocole programmé.

3.  Système de manipulation de fluide selon l'une quelconque des revendications 1 à 2, dans lequel chacun de la pluralité de récipients de réactif (240, 320, 350) chargés dans le porte-récipient (204) peut tourner le long d'un axe central (A) du récipient de réactif, et de préférence dans lequel le porte-récipient (204) est un carrousel de réactif pouvant tourner le long d'un axe central (A) du carrousel de réactif.

4.  Système de manipulation de fluide selon la revendication 3, dans lequel le dispositif d'imagerie (107, 206) est configuré pour produire une image composite de chacun de la pluralité de récipients de réactif (240, 320, 350) par imagerie par balayage de fente.

5.  Système de manipulation de fluide selon la revendication 4, dans lequel le processeur est en outre configuré pour étalonner une vitesse de rotation de récipients de réactif individuels (240, 320, 350) dans le porte-récipient (204) en utilisant une étiquette d'étalonnage géométrique.

6.  Système de manipulation de fluide selon l'une quelconque des revendications 1 à 5, dans lequel le dispositif d'imagerie (107, 206) présente un champ de vision configuré pour imager simultanément la pluralité de récipients de réactif (240, 320, 350) dans le porte-récipient (204).

7.  Système de manipulation de fluide selon l'une quelconque des revendications 1 à 6, dans lequel le support de stockage non transitoire lisible par ordinateur inclut une base de données incluant des indicateurs visuels pour des récipients de réactif (240, 320, 350) provenant de différents fabricants incluant un numéro de lot et une date d'expiration.

8.  Système de manipulation de fluide selon la revendication 7, dans lequel le processeur (108A, 214) est configuré pour comparer des indicateurs visuels dans la base de données pour déchiffrer les indicateurs visuels dans les images, et de préférence dans lequel le processeur est configuré pour comparer les indicateurs visuels déchiffrés dans les images à des informations dans le protocole programmé (108F).

9. Système de manipulation de fluide selon l'une quelconque des revendications 1 à 8, dans lequel :

le système de manipulation de fluide est configuré pour déterminer un niveau de liquide à l'intérieur d'un récipient de réactif (240, 320, 350) ; et
le processeur (108A, 214) est en outre configuré pour confirmer qu'un volume de liquide suffisant est contenu dans le récipient de réactif (240, 320, 350) conformément au protocole programmé (108F).

10. Système de manipulation de fluide selon l'une quelconque des revendications 1 à 9, dans lequel les indicateurs visuels reconnus comprennent des caractères alphanumériques.

11. Système de manipulation de fluide selon l'une quelconque des revendications 1 à 10, comprenant en outre :

un plateau (105) présentant des emplacements de source et des emplacements de destination ; et
une pipette (141) configurée pour aspirer du liquide à partir d'emplacements de source sur le plateau et pour distribuer les liquides aspirés à des emplacements de destination sur le plateau,
dans lequel le protocole programmé (108F) spécifie en outre un emplacement de destination pour le réactif correspondant dans chacun de la pluralité de récipients de réactif (240, 320, 350) chargés dans le porte-récipient (204), et
dans lequel le processeur est en outre configuré, pour chacun de la pluralité de récipients de réactif (240, 320, 350) chargés dans le porte-récipient (204), pour :

déterminer l'emplacement de destination spécifié pour le réactif identifié dans le protocole programmé (108F) ;
diriger la pipette (141) pour aspirer un volume de liquide depuis le récipient de réactif dans le porte-récipient, et
diriger la pipette pour distribuer le volume aspiré à l'emplacement de destination déterminé pour le réactif identifié.

12. Système de manipulation de fluide selon la revendication 11, dans lequel le processeur est en outre configuré, pour chaque récipient de réactif chargé dans le porte-récipient, pour diriger la pipette pour aspirer le volume de liquide à partir du récipient de réactif et pour distribuer le volume aspiré à l'emplacement de destination déterminé indépendamment de la position dans le porte-récipient dans lequel le récipient de réactif a été chargé.

13. Système de manipulation de fluide selon l'une quelconque des revendications 1 à 12, dans lequel le processeur est en outre configuré pour déterminer, à partir d'images du porte-récipient, si des capuchons (248) ont été retirés des récipients de réactif (240), et pour émettre une alerte si un capuchon n'a pas été retiré d'un récipient de réactif.

14. Procédé d'identification de réactifs chargés dans un système de manipulation de fluide, le procédé comprenant :

la programmation d'un protocole (108F) pour préparer un échantillon dans un dispositif de commande (214) du système de manipulation de fluide ;
le chargement de multiples récipients de réactif (240, 320, 350) dans un porte-récipient (204) du système de manipulation de fluide ;
l'imagerie d'étiquettes individuelles des multiples récipients de réactif avec un dispositif d'imagerie (107, 206) pour produire des images d'étiquette ;
la comparaison d'informations dans les images d'étiquette à des informations d'identification situées dans une base de données en communication avec le dispositif de commande ;
le fait de déterminer si des réactifs appropriés ont été chargés dans le porte-récipient (204) pour mettre en œuvre le protocole ; et
l'adaptation du protocole lorsque les récipients de réactif sont chargés dans des positions incorrectes pour accéder au récipient de réactif approprié (240, 320, 350) indépendamment de l'emplacement dans le porte-récipient (204).

FIG. 1

FIG. 2

FIG. 3

**FIG. 4A**

**FIG. 4B**

FIG. 4C

FIG. 4D

FIG. 5

## NGS Library Preparation

http:// yourtab.thecloud/NGSPrep

Stranded Total RNA Kit
(Uses RNA Index tubes )

⬆From File  ⊞View Plate Map

| | | Required Volume (µL) | Reagent Name |
|---|---|---|---|
| 1 | ☐ | 7 | dATP |
| 2 | ☐ | 14.7 | dNTP Mix |
| 3 | ☐ | 70 | End Repair Buffer |
| 4 | ☐ | 21 | Exo-Klenow |
| 5 | ☐ | 14 | Klenow DNA Polymerase |
| 6 | ☐ | 35 | Klenow Polymerase Buffer |
| 7 | ☐ | 70 | SureSelect Adapter Oligo Mix |
| 8 | ☐ | 8.75 | SureSelect Primer |
| 9 | ☐ | 10.5 | T4 DNA Ligase |
| 10 | ☐ | 70 | T4 DNA Ligase Buffer |
| 11 | ☐ | 7 | T4 DNA Polymerase |
| 12 | ☐ | 15.4 | T4 Polynucleotide Kinase |

🗑Delete Batch  💾Save Batch

**FIG. 6**

EP 4 031 881 B1

**FIG. 7**

FIG. 8

FIG. 9A

FIG. 9B

FIG. 9C

400

402 — Select protocol for Programming system

404 — Generate reagent list

406 — Load reagent vials into carousel

408 — Load carousel into machine

410 — Image carousel

412 — Identify individual reagent vial labels

414 — Generate label image files

416 — Obtain vial information from label image files

418 — Look-up vial information in database

420 — Compare vial information to programmed protocol

428

Notify operator

422 — Are correct reagent vials loaded into carousel? — No

Yes

424 — Are reagent vials loaded in correct location? — No

Yes

426 — Run protocol

FIG. 10

EP 4 031 881 B1

500

502 Load Carousel

Shut Door

Initiate Processing

514 Correct Error

Lock Door 504

Read Carousel Barcode - - - - - Camera Detection

506 Correct Carousel Type Loaded?

[No]    [Yes]

508 Check for Cap Presence - - - - - Camera Detection

[No]    510 Vials are Uncapped?

[Yes]

516 Image and OCR Vial Labels - - - - - Camera Detection

518 Carousel Contains Expected Reagents?

512 [No]    [Yes]

Unlock Door    LLS Reagent

Display Error    Aliquot Reagent    520

[Yes] More Reagents to Aliquot on Carousel?

[No]

Unlock Door

522

Prompt for Next Workflow Action - - -

Next Workflow Action Includes:
* Fix Reagent Vials that Failed LLS
* Add Next Carousel and Repeat the Whole Process
* Proceed to Bulk/Sample Loading

FIG. 11

**FIG. 12**

**FIG. 13A**

**FIG. 13B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62901606
- WO 2018057959 A, Stahl
- WO 2016090113 A, Allen
- US 2012179293 A